# EUROPEAN PATENT APPLICATION

(11) **EP 4 697 107 A1**
(43) Date of publication of application: **18.02.2026**
(21) Application number: 24881041.8
(22) Date of filing: 12.06.2024
(51) Int. Cl.: G05B 19/042

(54) **DEVICE CONTROL METHOD AND ELECTRONIC DEVICE**

(30) Priority: 25.10.2023 CN 202311393533
(71) Applicant: Huawei Technologies Co., Ltd., Shenzhen, Guangdong 518129 (CN)
(72) Inventor: CHEN, Ying, Shenzhen, Guangdong 518129 (CN); HE, Yongzhe, Shenzhen, Guangdong 518129 (CN); XU, Tianliang, Shenzhen, Guangdong 518129 (CN)
(74) Representative: Goddar, Heinz J.
(86) International application number: PCT/CN2024/098661
(87) International publication number: WO 2025/086663

(57) **Abstract**

This application provides a device control method and an electronic device, and relates to the field of terminal technologies. In this application, a first electronic device sends a control command based on an adjustment performance capability level of a smart device and different waiting time, to improve rotation immediateness performance of the first electronic device. The method is applied to the first electronic device, and includes: receiving a first instruction; determining that an adjustment performance capability level of a first target smart device that the first instruction instructs to control is a first capability level; sending, to the first target smart device after first waiting time corresponding to the first capability level, a first control command corresponding to the first instruction; receiving a second instruction; determining that an adjustment performance capability level of a second target smart device that the second instruction instructs to control is a second capability level; and sending, to the second target smart device after second waiting time corresponding to the second capability level, a second control command corresponding to the second instruction, where the first capability level is higher than the second capability level, and the first waiting time is less than the second waiting time.

## Description

This application claims priority to Chinese Patent Application No. 202311393533.6, filed with the China National Intellectual Property Administration on October 25, 2023 and entitled "DEVICE CONTROL METHOD AND ELECTRONIC DEVICE", which is incorporated herein by reference in its entirety.

### TECHNICAL FIELD

This application relates to the field of terminal technologies, and in particular, to a device control method and an electronic device.

### BACKGROUND

With development of terminal technologies, control methods for smart devices are gradually diversified, for example, conventional switch panel control, mobile phone application control, voice control, and knob control. Knob control exhibits higher requirements for smooth rotation immediateness experience during adjustment than other control methods.

For example, in a process of adjusting a volume of a speaker via a knob, a user expects the volume of the speaker to increase or decrease synchronously with rotation of the knob. However, due to severe stuttering in response during knob control, volume control exhibits noticeable jerkiness, affecting user experience.

### SUMMARY

To resolve the foregoing technical problems, this application provides a device control method and an electronic device. According to the technical solution provided in this application, a first electronic device sends a control command based on an adjustment performance capability level of a smart device and different waiting time, to improve rotation immediateness performance of the first electronic device.

To achieve the foregoing technical objective, this application provides the following technical solutions.

According to a first aspect, a device control method is provided. The method includes: A first electronic device receives a first instruction sent by a second electronic device. The first electronic device determines that an adjustment performance capability level of a first target smart device that the first instruction instructs to control is a first capability level. The first electronic device sends, to the first target smart device after first waiting time corresponding to the first capability level, a first control command corresponding to the first instruction. The first electronic device receives a second instruction sent by the second electronic device. The first electronic device determines that an adjustment performance capability level of a second target smart device that the second instruction instructs to control is a second capability level. The first electronic device sends, to the second target smart device after second waiting time corresponding to the second capability level, a second control command corresponding to the second instruction. The first capability level is higher than the second capability level, and the first waiting time is less than the second waiting time.

In this way, compared with a conventional technology in which after generating a control command, the first electronic device directly sends the control command to a smart device, and in this case, control commands are backlogged due to limited adjustment performance of the smart device, resulting in long response duration and affecting rotation immediateness performance of the device; in the device control method provided in this embodiment of this application, smart devices are graded, and control commands are sent to different smart devices based on waiting time corresponding to different adjustment performance capability levels, to reduce response duration, improve rotation immediateness performance of the devices, avoid stuttering, and improve user experience.

In addition, the first electronic device can control smart devices with different adjustment performance, and provide graded adjustment effect experience, thereby improving user experience.

According to the first aspect, after receiving the first instruction sent by the second electronic device, the method further includes: The first electronic device determines that the first instruction meets a preset condition, and sets a calibration point based on information carried in the first instruction.

According to the first aspect or any one of the foregoing implementations of the first aspect, the preset condition includes any one of the following: The first instruction is an instruction for starting controlling the first target smart device for the first time, the first instruction is an instruction for stopping controlling the first target smart device, or a difference between an accumulated value corresponding to the first instruction and an accumulated value corresponding to a last calibration point is greater than or equal to a preset value.

In some examples, the first electronic device marks a calibration point and a non-calibration point by using different values. For example, the first electronic device marks an accumulated value of the calibration point as 1, and marks an accumulated value of the non-calibration point as 0; or the first electronic device marks an accumulated value of the calibration point as 0, and marks an accumulated value of the non-calibration point as 1. For another example, the first electronic device marks the accumulated value of the calibration point as 1 or 0, but does not mark the non-calibration point. In this way, the first electronic device (or a gateway) can determine, based on a marked value, whether a corresponding control command needs to be retransmitted, where the control command carries an accumulated value.

According to the first aspect or any one of the foregoing implementations of the first aspect, sending, to the first target smart device after the first waiting time corresponding to the first capability level, the first control command corresponding to the first instruction includes: When the first instruction meets the preset condition, after the first waiting time, the first electronic device sends the first control command to the first target smart device based on a first number of retransmissions. When the first instruction does not meet the preset condition, after the first waiting time, the first electronic device sends the first control command to the first target smart device based on a second number of retransmissions. The first number of retransmissions is greater than the second number of retransmissions, and the second number of retransmissions is an integer greater than or equal to 0.

In this way, the calibration point and the non-calibration point are set, so that at the non-calibration point, a speed of sending a control command is ensured by reducing a number of retransmissions, to improve overall communication performance; and at the calibration point, a number of retransmissions is increased, to increase a success rate of sending a control command.

According to the first aspect or any one of the foregoing implementations of the first aspect, after the first waiting time, sending the first control command to the first target smart device based on the first number of retransmissions includes: After the first waiting time, the first electronic device sends the first control command to the first target smart device for the first number of retransmissions.

In some examples, after receiving the first control command and performing a corresponding operation, the first target smart device may not need to send an execution result to the first electronic device. In this case, the first electronic device does not wait for a feedback from the first target smart device. For example, the first electronic device or a third electronic device sends the first control command to the first target smart device in a Bluetooth broadcast manner. In this case, the first target smart device does not need to feed back the execution result of the first control command.

For example, the first electronic device does not need to pay attention to the result of executing the first control command by the first target smart device, but only needs to complete retransmission of the first control command based on a preset number of retransmissions.

According to the first aspect or any one of the foregoing implementations of the first aspect, after the first waiting time, sending the first control command to the first target smart device based on the first number of retransmissions includes: After the first waiting time, the first electronic device determines, based on the first number of retransmissions, a maximum number of times of sending the first control command to the first target smart device, where the maximum number of times is the first number of retransmissions.

In some examples, after receiving the first control command and performing a corresponding operation, the first target smart device sends an execution result to the first electronic device. In this case, the first electronic device waits for the execution result fed back by the first target smart device, and determines, based on the execution result, whether to continue to retransmit the first control command. For example, the first electronic device or a third electronic device sends the first control command to the first target smart device in a PLC manner. In this case, the first target smart device needs to feed back the execution result of the first control command. For example, if the first electronic device determines, based on the execution result fed back by the first target smart device, that the first control command is successfully executed, the first electronic device may stop retransmitting the first control command. For another example, if the first electronic device determines, based on the execution result fed back by the first target smart device, that the first control command fails to be executed, the first electronic device may continue to retransmit the first control command until the first electronic device receives a feedback indicating that the first control command is successfully executed or completes retransmission for the first number of retransmissions.

The first electronic device retransmits the first control command for the first number of retransmissions to the first target smart device at most, thereby reducing retransmission power consumption. That is, the first number of retransmissions is a maximum number of retransmissions.

In this way, a retransmission process is standardized by using the first number of retransmissions, so that a success rate of control command transmission is improved, and multiple invalid retransmissions are avoided.

According to the first aspect or any one of the foregoing implementations of the first aspect, the method further includes: The first electronic device receives a third instruction sent by the second electronic device. The first electronic device determines that the third instruction is used to control the first target smart device. The first electronic device determines, based on an adjustment value indicated by the third instruction and a first accumulated value corresponding to a fourth instruction that is received last time and used to control the first target smart device, a second accumulated value corresponding to the third instruction. The first electronic device sends a third control command to the first target smart device after the first waiting time, where the third control command carries the second accumulated value.

In some examples, the smart device receives the first control command sent by the first electronic device, where the first control command indicates to start control. In response to the first control command, the smart device stores a current value of the device as a reference value. The smart device receives a fifth control instruction sent by the first electronic device, determines a target value based on an accumulated value indicated by the fifth control instruction and the reference value, and adjusts the current value of the device to the target value.

In this way, in a subsequent adjustment process of the target smart home device, even if a packet loss exception occurs, the target smart home device can still receive, through retransmission, at least an accumulated increment value sent by a subsystem (or the gateway) through retransmission. In this way, the target smart home device can also adjust the device to a correct increment value based on the reference value and a subsequently received accumulated increment value, and correct an exception in time, so that a problem that the device is always in an abnormal target value does not occur, thereby improving user experience.

According to the first aspect or any one of the foregoing implementations of the first aspect, after receiving the first instruction sent by the second electronic device, the method further includes: The first electronic device monitors a data processing environment. Sending, to the first target smart device after the first waiting time corresponding to the first capability level, the first control command corresponding to the first instruction includes: When the adjustment performance capability level of the first target smart device is the first capability level, and the data processing environment belongs to a first data processing environment level, after the first waiting time, the first electronic device sends the first control command to the first target smart device. When the adjustment performance capability level of the first target smart device is the first capability level, and the data processing environment belongs to a second data processing environment level, after third waiting time, the first electronic device sends the first control command to the first target smart device. A busy degree indicated by the second data processing environment level is greater than a busy degree indicated by the first data processing environment level, and the third waiting time is waiting time that is determined based on the first waiting time and that is greater than the first waiting time.

In this way, the first electronic device adaptively adjusts waiting time based on a busy degree of the data processing environment, to improve a packet sending success rate and avoid blocking and crash in the communication environment.

According to the first aspect or any one of the foregoing implementations of the first aspect, the method further includes: The first electronic device receives a fifth instruction sent by the second electronic device, where the fifth instruction instructs to control the first target smart device. The first electronic device determines that the data processing environment is in a severely busy state. When the fifth instruction is an instruction for stopping controlling the first target smart device, the first electronic device sends, to the first target smart device, a fourth control command corresponding to the fifth instruction.

In this way, when the data processing environment is in the severely busy state, the first electronic device sends a control command during rotation stop, thereby ensuring that a final device effect after the smart device executes the control command meets a requirement, and avoiding a case in which a control command is transmitted multiple times in an adjustment process. Therefore, communication load is reduced and communication blocking and crash are avoided.

According to the first aspect or any one of the foregoing implementations of the first aspect, the method further includes: The first electronic device receives a sixth instruction sent by the second electronic device, where the sixth instruction instructs to control the first target smart device. The first electronic device determines that the data processing environment is in a blocked state. The first electronic device discards the sixth instruction.

In this way, when the data processing environment is in the blocked state, the first electronic device discards a received instruction, to avoid communication crash caused by sending a control command corresponding to the instruction.

According to the first aspect or any one of the foregoing implementations of the first aspect, before receiving the first instruction sent by the second electronic device, the method further includes: The first electronic device receives device information sent by the first target smart device. The first electronic device determines the adjustment performance capability level of the first target smart device based on the device information.

In some examples, the device information includes whether the first target smart device supports calculation of the target value and/or a time length for the first target smart device to process the first control command.

In this way, before receiving an instruction sent by the second device, the first electronic device can determine an adjustment performance capability level of the smart device based on device information of the smart device, so that when a control command corresponding to the instruction needs to be sent subsequently, required waiting time can be automatically matched.

According to the first aspect or any one of the foregoing implementations of the first aspect, the first control command is a relative command or an absolute command. The relative command indicates the first target smart device to generate a target value based on an adjustment value indicated by the relative command, and adjust a current value of the device to the target value, and the absolute command indicates the target value, and indicates the first target smart device to adjust the current value of the device to the target value.

In this way, the first electronic device can determine, based on a data processing capability of the smart device, to send the absolute command or the relative command to the smart device.

According to a second aspect, a device control method is provided. The method includes: A third electronic device receives a first control command sent by a first electronic device, where the first control command carries first calibration information used to determine a number of retransmissions. The third electronic device sends, based on a first number of retransmissions, the first control command to a first target smart device that the first control command indicates to control. The third electronic device receives a fifth control command sent by the first electronic device, where the fifth control command does not carry the first calibration information or carries second calibration information used to determine a number of retransmissions. The third electronic device sends, based on a second number of retransmissions, the fifth control command to the first target smart device that the fifth control command indicates to control. The first number of retransmissions is greater than the second number of retransmissions.

In some examples, the control command received by the third electronic device includes the calibration information determined by the first electronic device, and the third electronic device may determine, based on the calibration information, whether to retransmit the control command. In some examples, the control command forwarded by the third electronic device to the smart device may include or not include the calibration information. Correspondingly, if the control command received by the smart device includes the calibration information, the smart device may not process the calibration information, for example, directly discard the calibration information.

According to the second aspect, the method further includes: The third electronic device receives device information sent by the first target smart device. The third electronic device forwards the device information to the first electronic device.

In this way, the first electronic device obtains the device information of the smart device by using the third electronic device, to determine a performance adjustment capability of the smart device.

According to a third aspect, a device control method is provided. The method includes: A smart device receives a first control command sent by a first electronic device, where the first control command indicates to start control. In response to the first control command, the smart device stores a current value of the device as a reference value. The smart device receives a fifth control instruction sent by the first electronic device, determines a target value based on an accumulated value indicated by the fifth control instruction and the reference value, and adjusts the current value of the device to the target value.

According to the third aspect, that the smart device receives the first control command sent by the first electronic device includes: The smart device receives the first control command sent by the first electronic device based on a first number of retransmissions. That the smart device receives the fifth control command sent by the first electronic device includes: The smart device receives the fifth control command sent by the first electronic device based on a second number of retransmissions. The first number of retransmissions is greater than the second number of retransmissions.

According to the third aspect or any one of the foregoing implementations of the first aspect, after the smart device receives the first control command sent by the first electronic device, the method further includes: The smart device sends a first response to the first electronic device, where the first response indicates an execution status of the first control command.

In this way, based on different control command transmission manners, the smart device may choose whether to feed back the execution status of the control command. For example, if the smart device receives the control command in a Bluetooth broadcast manner, the smart device may not need to feed back the execution status of the control command to the first electronic device. For example, if the smart device receives the control command in a PLC manner, the smart device may feed back the execution status of the control command to the first electronic device.

According to the third aspect or any one of the foregoing implementations of the first aspect, before the smart device receives the first control command sent by the first electronic device, the method further includes: The smart device sends device information to the first electronic device, where the device information is used to obtain an adjustment performance capability level of the smart device.

According to a fourth aspect, a first electronic device is provided. The first electronic device includes a processor and a memory. The memory is coupled to the processor. The memory is configured to store computer program code. The computer program code includes computer instructions. When the processor reads the computer instructions from the memory, the first electronic device is caused to receive a first instruction sent by a second electronic device. The first electronic device determines that an adjustment performance capability level of a first target smart device that the first instruction instructs to control is a first capability level. The first electronic device sends, to the first target smart device after first waiting time corresponding to the first capability level, a first control command corresponding to the first instruction. The first electronic device receives a second instruction sent by the second electronic device. The first electronic device determines that an adjustment performance capability level of a second target smart device that the second instruction instructs to control is a second capability level. The first electronic device sends, to the second target smart device after second waiting time corresponding to the second capability level, a second control command corresponding to the second instruction. The first capability level is higher than the second capability level, and the first waiting time is less than the second waiting time.

According to the fourth aspect, when the processor reads the computer instructions from the memory, the first electronic device is further caused to determine that the first instruction meets a preset condition, and set a calibration point based on information carried in the first instruction.

According to the fourth aspect or any one of the foregoing implementations of the fourth aspect, sending, to the first target smart device after the first waiting time corresponding to the first capability level, the first control command corresponding to the first instruction includes: When the first instruction meets the preset condition, after the first waiting time, the first electronic device sends the first control command to the first target smart device based on a first number of retransmissions. When the first instruction does not meet the preset condition, after the first waiting time, the first electronic device sends the first control command to the first target smart device based on a second number of retransmissions. The first number of retransmissions is greater than the second number of retransmissions, and the second number of retransmissions is an integer greater than or equal to 0.

According to the fourth aspect or any one of the foregoing implementations of the fourth aspect, after the first waiting time, sending the first control command to the first target smart device based on the first number of retransmissions includes: After the first waiting time, the first electronic device sends the first control command to the first target smart device for the first number of retransmissions.

According to the fourth aspect or any one of the foregoing implementations of the fourth aspect, after the first waiting time, sending the first control command to the first target smart device based on the first number of retransmissions includes: After the first waiting time, the first electronic device determines, based on the first number of retransmissions, a maximum number of times of sending the first control command to the first target smart device, where the maximum number of times is the first number of retransmissions.

According to the fourth aspect or any one of the foregoing implementations of the fourth aspect, the preset condition includes any one of the following: The first instruction is an instruction for starting controlling the first target smart device for the first time, the first instruction is an instruction for stopping controlling the first target smart device, or a difference between an accumulated value corresponding to the first instruction and an accumulated value corresponding to a last calibration point is greater than or equal to a preset value.

According to the fourth aspect or any one of the foregoing implementations of the fourth aspect, when the processor reads the computer instructions from the memory, the first electronic device is further caused to receive a third instruction sent by the second electronic device. The first electronic device determines that the third instruction is used to control the first target smart device. The first electronic device determines, based on an adjustment value indicated by the third instruction and a first accumulated value corresponding to a fourth instruction that is received last time and used to control the first target smart device, a second accumulated value corresponding to the third instruction. The first electronic device sends a third control command to the first target smart device after the first waiting time, where the third control command carries the second accumulated value.

According to the fourth aspect or any one of the foregoing implementations of the fourth aspect, when the processor reads the computer instructions from the memory, the first electronic device is further caused to monitor a data processing environment. Sending, to the first target smart device after the first waiting time corresponding to the first capability level, the first control command corresponding to the first instruction includes: When the adjustment performance capability level of the first target smart device is the first capability level, and the data processing environment belongs to a first data processing environment level, after the first waiting time, the first electronic device sends the first control command to the first target smart device. When the adjustment performance capability level of the first target smart device is the first capability level, and the data processing environment belongs to a second data processing environment level, after third waiting time, the first electronic device sends the first control command to the first target smart device. A busy degree indicated by the second data processing environment level is greater than a busy degree indicated by the first data processing environment level, and the third waiting time is waiting time that is determined based on the first waiting time and that is greater than the first waiting time.

According to the fourth aspect or any one of the foregoing implementations of the fourth aspect, when the processor reads the computer instructions from the memory, the first electronic device is further caused to receive a fifth instruction sent by the second electronic device, where the fifth instruction instructs to control the first target smart device. The first electronic device determines that the data processing environment is in a severely busy state. When the fifth instruction is an instruction for stopping controlling the first target smart device, the first electronic device sends, to the first target smart device, a fourth control command corresponding to the fifth instruction.

According to the fourth aspect or any one of the foregoing implementations of the fourth aspect, when the processor reads the computer instructions from the memory, the first electronic device is further caused to receive a sixth instruction sent by the second electronic device, where the sixth instruction instructs to control the first target smart device. The first electronic device determines that the data processing environment is in a blocked state. The first electronic device discards the sixth instruction.

According to the fourth aspect or any one of the foregoing implementations of the fourth aspect, when the processor reads the computer instructions from the memory, the first electronic device is further caused to receive device information sent by the first target smart device. The first electronic device determines the adjustment performance capability level of the first target smart device based on the device information.

According to the fourth aspect or any one of the foregoing implementations of the fourth aspect, the first control command is a relative command or an absolute command. The relative command indicates the first target smart device to generate a target value based on an adjustment value indicated by the relative command, and adjust a current value of the device to the target value, and the absolute command indicates the target value, and indicates the first target smart device to adjust the current value of the device to the target value.

According to a fifth aspect, a third electronic device is provided. The third electronic device includes a processor and a memory. The memory is coupled to the processor. The memory is configured to store computer program code. The computer program code includes computer instructions. When the processor reads the computer instructions from the memory, the third electronic device is caused to receive a first control command sent by a first electronic device, where the first control command carries first calibration information. The third electronic device sends, based on a first number of retransmissions, the first control command to a first target smart device that the first control command indicates to control. The third electronic device receives a fifth control command sent by the first electronic device, where the fifth control command does not carry the first calibration information or carries second calibration information. The third electronic device sends, based on a second number of retransmissions, the fifth control command to the first target smart device that the fifth control command indicates to control. The first number of retransmissions is greater than the second number of retransmissions.

According to the fifth aspect, when the processor reads the computer instructions from the memory, the third electronic device is further caused to receive device information sent by the first target smart device. The third electronic device forwards the device information to the first electronic device.

According to a sixth aspect, a smart device is provided. The smart device includes a processor and a memory. The memory is coupled to the processor. The memory is configured to store computer program code. The computer program code includes computer instructions. When the processor reads the computer instructions from the memory, the smart device is caused to receive a first control command sent by a first electronic device, where the first control command indicates to start control. In response to the first control command, the smart device stores a current value of the device as a reference value. The smart device receives a fifth control instruction sent by the first electronic device, determines a target value based on an accumulated value indicated by the fifth control instruction and the reference value, and adjusts the current value of the device to the target value.

According to the sixth aspect, that the smart device receives the first control command sent by the first electronic device includes: The smart device receives the first control command sent by the first electronic device based on a first number of retransmissions. That the smart device receives the fifth control command sent by the first electronic device includes: The smart device receives the fifth control command sent by the first electronic device based on a second number of retransmissions. The first number of retransmissions is greater than the second number of retransmissions.

According to the sixth aspect or any one of the foregoing implementations of the first aspect, when the processor reads the computer instructions from the memory, the smart device is further caused to send a first response to the first electronic device, where the first response indicates an execution status of the first control command.

According to the sixth aspect or any one of the foregoing implementations of the first aspect, when the processor reads the computer instructions from the memory, the smart device is further caused to send device information to the first electronic device, where the device information is used to obtain an adjustment performance capability level of the smart device.

According to a seventh aspect, an electronic device is provided. The electronic device has a function of implementing the device control method according to the first aspect and any one of the possible implementations of the first aspect; or the electronic device has a function of implementing the device control method according to the second aspect and any one of the possible implementations of the second aspect; or the electronic device has a function of implementing the device control method according to the third aspect and any one of the possible implementations of the third aspect. The function may be implemented by hardware, or may be implemented by hardware executing corresponding software. The hardware or the software includes one or more modules corresponding to the function.

According to an eighth aspect, a computer-readable storage medium is provided. The computer-readable storage medium stores a computer program (which may also be referred to as instructions or code). When the computer program is executed by an electronic device, the electronic device is caused to perform the method according to the first aspect or any one of the implementations of the first aspect, or the electronic device is caused to perform the method according to the second aspect or any one of the implementations of the second aspect, or the electronic device is caused to perform the method according to the third aspect or any one of the implementations of the third aspect.

According to a ninth aspect, a computer program product is provided. When the computer program product runs on an electronic device, the electronic device is caused to perform the method according to the first aspect or any one of the implementations of the first aspect, or the electronic device is caused to perform the method according to the second aspect or any one of the implementations of the second aspect, or the electronic device is caused to perform the method according to the third aspect or any one of the implementations of the third aspect.

According to a tenth aspect, a circuit system is provided. The circuit system includes a processing circuit, and the processing circuit is configured to perform the method according to the first aspect or any one of the implementations of the first aspect, or the processing circuit is configured to perform the method according to the second aspect or any one of the implementations of the second aspect, or the processing circuit is configured to perform the method according to the third aspect or any one of the implementations of the third aspect.

According to an eleventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect or any one of the implementations of the first aspect, or the at least one processor performs the method according to the second aspect or any one of the implementations of the second aspect, or the at least one processor performs the method according to the third aspect or any one of the implementations of the third aspect.

For technical effects of the foregoing aspects, refer to each other. Details are not described herein again.

### BRIEF DESCRIPTION OF DRAWINGS

FIG. 1 is a diagram of a knob control scenario according to an embodiment of this application;
FIG. 2 is a diagram of a knob control process according to an embodiment of this application;
FIG. 3 is a diagram 1 of a communication system to which a device control method is applied according to an embodiment of this application;
FIG. 4 is a diagram 2 of a communication system to which a device control method is applied according to an embodiment of this application;
FIG. 5 is a diagram of a hardware structure of a second device according to an embodiment of this application;
FIG. 6 is a schematic flowchart 1 of a device control method according to an embodiment of this application;
FIG. 7 is a diagram of a graded device control scenario according to an embodiment of this application;
FIG. 8 is a schematic flowchart 2 of a device control method according to an embodiment of this application;
FIG. 9 is a diagram of a control command retransmission scenario according to an embodiment of this application;
FIG. 10 is a schematic flowchart 3 of a device control method according to an embodiment of this application;
FIG. 11 is a diagram of a scenario of adaptively adjusting control command buffer time according to an embodiment of this application;
FIG. 12 is a schematic flowchart 4 of a device control method according to an embodiment of this application;
FIG. 13 is a diagram of a structure of a first electronic device according to an embodiment of this application; and
FIG. 14 is a diagram of a structure of a third electronic device according to an embodiment of this application.

### DESCRIPTION OF EMBODIMENTS

The following describes the technical solutions in embodiments of this application with reference to the accompanying drawings in embodiments of this application. In descriptions of embodiments of this application, terms used in the following embodiments are merely intended to describe specific embodiments, but not to limit this application. The terms "one", "a", "the", "the foregoing", and "this" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and variants thereof all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a number of indicated technical features.

In embodiments of this application, words such as "example" or "for example" indicate giving an example, an illustration, or a description. Any embodiment or design scheme described as an "example" or "for example" in embodiments of this application should not be construed as being more preferred or more advantageous than another embodiment or design scheme. Exactly, use of the word "example", "for example", or the like is intended to present a related concept in a specific manner.

In some embodiments, a user may control a smart device via a conventional switch panel, a mobile phone application, a voice, a knob, and the like. The smart device includes, for example, a smart home device (for example, a speaker, a curtain, or a light), a smart office device, and the like. Knob control exhibits higher requirements for smooth rotation immediateness experience during adjustment than other control methods. For example, in a process of adjusting a volume of a speaker via a knob, the user expects the volume of the speaker to increase or decrease synchronously with rotation of the knob. For example, the user expects that the volume of the speaker can be increased synchronously with rightward rotation of the knob, and the volume of the speaker can be decreased synchronously with leftward rotation of the knob. However, due to severe stuttering in response during knob control, volume control exhibits noticeable jerkiness, affecting user experience.

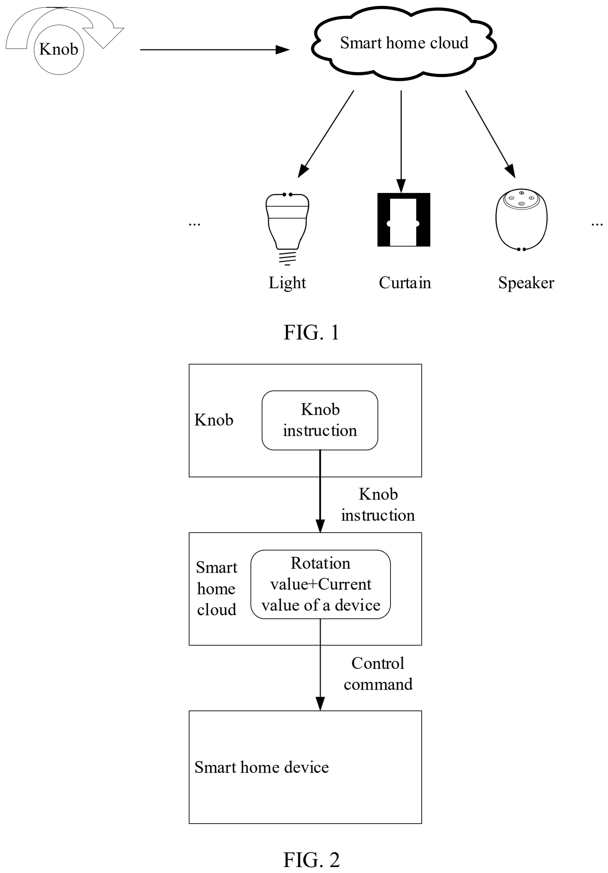

For example, as shown in FIG. 1, an example in which the smart device is a smart home device is used. In a smart home scenario, a knob controls a corresponding smart home device by using a smart home cloud. As shown in FIG. 2, after detecting a rotation operation of the user, the knob sends a corresponding instruction to the smart home cloud. After receiving the knob instruction, the smart home cloud determines a smart home device that the instruction instructs to control, and obtains a current value of the smart home device. Then, the smart home cloud determines a target value based on a knob indication value instructed by the knob instruction and the current value of the device. Then, the smart home cloud sends a control command to the smart home device instructed by the knob instruction, and includes the target value in the control command. Correspondingly, after receiving the control command, the smart home device can adjust the current value of the device to the target value. In this way, the knob controls the smart home device by using the foregoing process.

A delay of about 600 ms (ms) exists in a control response process of the smart home device, but a delay perceived by a person through human factor analysis is 160 ms to 200 ms. In this case, in a process in which the user controls the smart home device via the knob, the user can perceive a response of the smart home device, and obviously senses stuttering and jerkiness 600 ms after operating the knob. In addition, the foregoing control process supports only some preconfigured smart home devices, and is not universally applicable.

Besides, in a device control process, a lost control command cannot be retrieved. As a result, the target value determined by the smart home cloud based on the current value of the device and the knob indication value does not meet a user requirement.

In addition, when the smart home cloud receives instructions sent by a plurality of control devices (such as a knob) that have a same control policy, because instruction processing takes time, obvious control response waiting occurs, and rotation immediateness performance of the device is further affected.

Therefore, an embodiment of this application provides a device control method. A first electronic device sends a control command based on an adjustment performance capability level of a smart device and different waiting time, to improve rotation immediateness performance of the first electronic device.

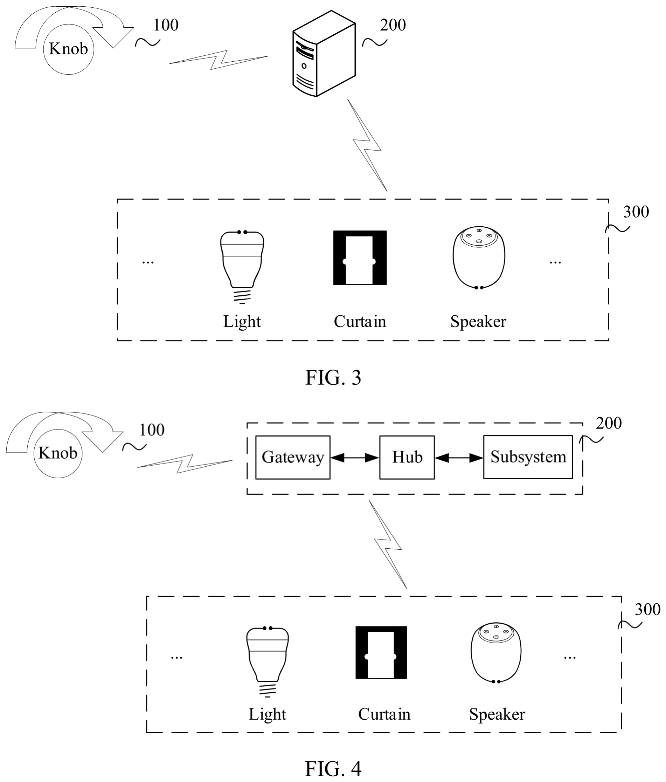

FIG. 3 is a diagram of a communication system to which a device control method is applied according to an embodiment of this application. As shown in FIG. 3, the communication system includes a first device 100, a second device 200, and a third device 300.

Optionally, the first device 100 is a device operated by a user, and the user controls the third device 300 via the first device 100. For example, the first device 100 is a knob or the like. Optionally, the knob may be a physical knob or a virtual knob. For example, a virtual knob is displayed on a control panel, and knob control is implemented in response to a touch operation of the user on the control panel.

Optionally, the second device 200 is a control device, and is configured to control the corresponding third device 300 according to an instruction sent by the first device 100. For example, the second device 200 is a smart home cloud or the like. Optionally, the second device 200 may be a device or a server that has a computing function, for example, a cloud server or a network server. The second device 200 may be one device, or may be a device cluster including a plurality of devices, or may be a cloud computing service center. For example, as shown in FIG. 4, the second device 200 is a device cluster including a plurality of devices, including a gateway, a hub, and a subsystem. In some examples, in response to a user operation, the first device 100 sends a corresponding instruction to the hub through a dedicated channel provided by the gateway. After receiving the instruction, the hub forwards the instruction to the subsystem through the dedicated channel. After receiving the instruction, the subsystem can generate a corresponding control command and send the control command to the third device 300. In some examples, the subsystem sends the control command to the third device 300 via the gateway. In this way, the dedicated channel can prevent another task from affecting instruction transmission, thereby improving instruction transmission efficiency. For example, after receiving the instruction sent by the first device 100 via the gateway, the hub directly interrupts another task, and preferentially and quickly processes the instruction, thereby improving instruction transmission efficiency. For another example, the second device 200 is one device. For example, the second device 200 is a subsystem. After receiving the instruction sent by the first device 100, the subsystem generates a corresponding control command, and sends the control command to the third device 300.

Optionally, the third device 300 may be a terminal device, for example, a smart home device, a mobile phone, a tablet computer, a notebook computer, a netbook, a personal digital assistant (personal digital assistant, PDA), a wearable device, or an artificial intelligence (artificial intelligence, AI) device. The smart home device includes, for example, a smart home control panel, an audio and video device (such as a smart screen or a speaker), a lighting system device (such as a desk lamp or an electric lamp), and an environment control device (such as an air purifier or a sweeping robot). An operating system installed on the third device 300 includes but is not limited to iOS^{®}, Android^{®}, Harmony^{®}, Windows^{®}, Linux^{®}, or another operating system. Alternatively, the third device 300 may not be installed with an operating system. A specific type of the third device 300, whether an operating system is installed, and a type of an operating system if the operating system is installed are not limited in this application.

In some embodiments, wireless communication connections may be established between the first device 100, the second device 200, and the third device 300 by using a wireless communication technology. The wireless communication technology includes but is not limited to at least one of the following: a wireless local area network (wireless local area network, WLAN) (for example, a wireless fidelity (wireless fidelity, Wi-Fi) network), power line communication (power line communication, PLC), Bluetooth (Bluetooth, BT) (for example, conventional Bluetooth or Bluetooth low energy (Bluetooth low energy, BLE) Bluetooth), near field communication (near field communication, NFC), Zigbee (Zigbee), frequency modulation (frequency modulation, FM), infrared (infrared, IR), and a UWB connection.

In some embodiments, the operating system is, for example, a smart home system, and the third device 300 is a smart home device. Alternatively, the operating system is a smart office system, and the third device 300 is a smart office device. Alternatively, the communication system may be another communication system such as an intelligent campus communication system. This is not limited in embodiments of this application. The following describes in detail the device control method provided in the embodiments of this application by using an example in which the communication system is, for example, a smart home system and the third device 300 is a smart home device.

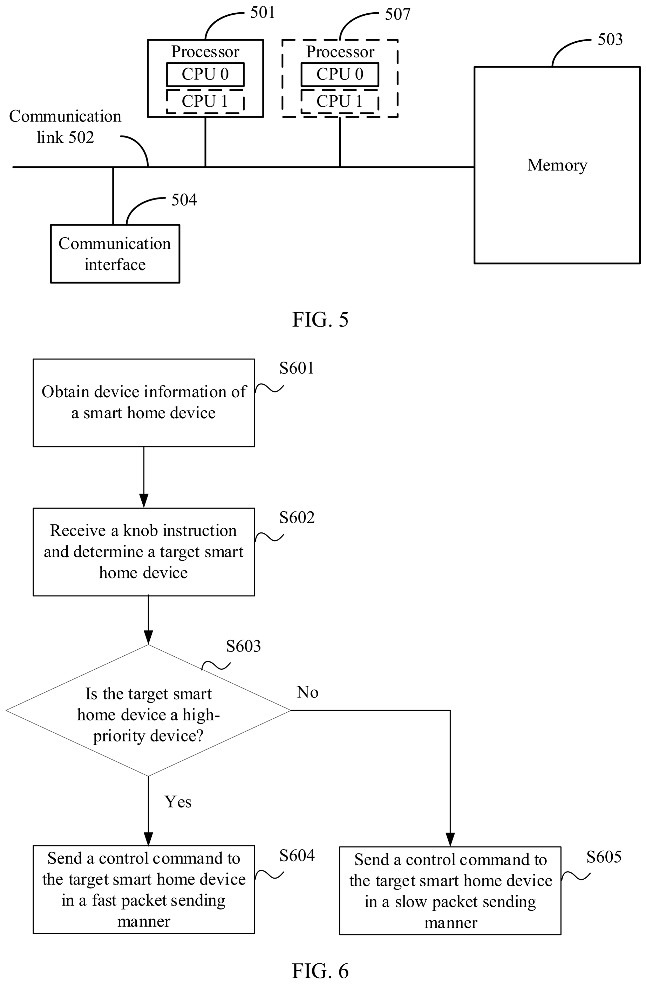

Optionally, the first device 100, the second device 200, and the third device 300 in this embodiment of this application may be implemented by using different devices, and the different devices may have same, similar, or different hardware structures, for example, a hardware structure shown in FIG. 5.

For example, an example in which the second device 200 has the hardware structure shown in FIG. 5 is used to describe the hardware structure shown in FIG. 5.

FIG. 5 is a diagram of a structure of the second device 200.

The second device 200 includes at least one processor 501, a communication line 502, a memory 503, and at least one communication interface 504. The memory 503 may be further included in the processor 501.

The processor 501 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 502 may include a path along which information is transmitted between the foregoing components.

The communication interface 504 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed sender, and the sender may be configured to send information to the another device. Alternatively, the transceiver may be an independently disposed receiver, and is configured to receive information from the another device. Alternatively, the transceiver may be a component that integrates functions of sending and receiving information. A specific implementation of the transceiver is not limited in embodiments of this application.

The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage, a disk storage medium or another magnetic storage device, or any other medium that can be used to carry or store expected program code in a form of instructions or a data structure and that can be accessed by a computer. However, the memory 503 is not limited thereto. The memory may exist independently and is connected to the processor through the communication line 502. The memory may alternatively be integrated with the processor.

The memory 503 is configured to store computer-executable instructions used to implement the solutions of this application, and the processor 501 controls execution of the computer-executable instructions. The processor 501 is configured to execute the computer-executable instruction stored in the memory 503, to implement the device control method provided in the following embodiments of this application.

Optionally, the computer-executable instructions in this embodiment of this application may also be referred to as application code, instructions, a computer program, or another name. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the second device 200 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

It may be understood that the structure shown in FIG. 5 in this embodiment of this application does not constitute a unique limitation on an implementation of the structure of the second device 200. In some other embodiments of this application, the second device 200 may include more or fewer components than those shown in the figure, or a combination of some components, or splits from some components, or a different component layout. The components shown in the figure may be implemented by hardware, software, or a combination of software and hardware.

The following describes in detail the device control method provided in embodiments of this application by using an example in which the first device 100 is a knob, the second device 200 is a control device, the third device 300 is a smart home device, and the communication system is a smart home system.

FIG. 6 is a schematic flowchart of a device control method according to an embodiment of this application. It should be noted that the method is not limited to a specific sequence described in FIG. 6 and below. It should be understood that, in another embodiment, a sequence of some steps in the method may be exchanged according to an actual requirement, or some steps in the method may be omitted or deleted. The method includes the following steps.

S601: A control device obtains device information of a smart home device.

The device information is information indicating adjustment performance of the smart home device. Optionally, a smart home device with high adjustment performance supports determining a target value based on a knob indication value, and a smart home device with low adjustment performance does not support determining a target value based on a knob indication value. Alternatively, a smart home device with high adjustment performance can quickly process a received control command, and a smart home device with low adjustment performance needs more time to process a received control command. Optionally, computing power of the smart home device affects the adjustment performance of the smart home device.

In some embodiments, when connecting to the control device, the smart home device sends the device information of the smart home device to the control device. For example, when connecting to a home network to which the control device belongs, the smart home device sends the device information of the smart home device to the control device.

In some examples, the smart home device sends, to the control device, information for connecting to the control device, where the information includes the device information. In some other examples, after connecting to the control device, the smart home device independently sends the device information to the control device.

In some embodiments, the smart home device classifies an adjustment performance capability level of the smart home device based on the device information. For example, a capability level with highest adjustment performance is a level 1, and a capability level with lowest adjustment performance is a level 4. Based on the device information, the control device classifies different smart home devices as devices with four different adjustment performance capability levels.

For example, the control device receives device information sent by a smart home device A, and determines that the smart home device A supports determining a target value based on a knob indication value and control command processing time is 120 ms. In this case, the control device may determine that an adjustment performance capability level of the smart home device A is a level 1. For another example, the control device receives device information sent by a smart home device B, and determines that the smart home device B does not support determining a target value based on a knob indication value, and control command processing time is 200 ms. In this case, the control device may determine that an adjustment performance capability level of the smart home device B is a level 2. For another example, the control device receives device information sent by a smart home device C, and determines that the smart home device C does not support determining a target value based on a knob indication value, and control command processing time is 500 ms. In this case, the control device may determine that an adjustment performance capability level of the smart home device C is a level 3. For another example, the control device receives device information sent by a smart home device D, and determines that the smart home device D does not support determining a target value based on a knob indication value, and control command processing time is 1000 ms. In this case, the control device may determine that an adjustment performance capability level of the smart home device D is a level 4.

In some other embodiments, the device information includes an adjustment performance capability level. After receiving the device information sent by the smart home device, the control device may directly determine the adjustment performance capability level of the smart home device.

It should be understood that, based on actual adjustment performance of the smart home device, the adjustment performance capability level of the smart home device may include more or fewer capability levels. This is not limited in embodiments of this application.

S602: The control device receives a knob instruction and determines a target smart home device.

In some embodiments, a knob generates a corresponding knob instruction in response to a rotation operation of a user. The knob instruction includes a knob indication value and a rotation status. For example, the knob indication value included in the instruction is increasing by 1, and the rotation status is rotation start (or described as rotation initiation), rotating, or rotation stop (or described as rotation halt). After generating the knob instruction, the knob sends the knob instruction to the control device, and correspondingly the control device receives the knob instruction sent by the knob. Then, the control device determines, according to the knob instruction, a target smart home device that the knob instructs to control.

In some examples, the control device stores mapping relationships between different knobs and smart home devices controlled by the knobs. Therefore, after receiving the knob instruction sent by the knob, the control device may determine, based on a mapping relationship, the target smart home device that the knob instruction instructs to control.

In some other examples, the knob instruction further includes an identifier of the target smart home device. In this case, after receiving the knob instruction sent by the knob, the control device may determine, based on the identifier carried in the knob instruction, the target smart home device that the knob instruction instructs to control.

For example, in the communication system architecture shown in FIG. 4, in response to a user operation, the knob sends a corresponding knob instruction to the hub through a dedicated channel provided by the gateway. After receiving the knob instruction, the hub interrupts another task and preferentially forwards the knob instruction to the subsystem through the dedicated channel. After receiving the knob instruction, the subsystem determines the target smart home device that the knob instruction instructs to control.

S603: The control device determines whether the target smart home device is a high-priority device; and if the target smart home device is a high-priority device, performs step S604; or if the target smart home device is not a high-priority device, performs step S605.

S604: The control device sends a control command to the target smart home device in a fast packet sending manner.

S605: The control device sends a control command to the target smart home device in a slow packet sending manner.

In some embodiments, time for processing a control command varies depending on different adjustment performance capability levels of smart home devices. Therefore, after determining the target smart home device, the control device may select, based on an adjustment performance capability level of the target smart home device, a packet sending manner for sending the control command.

Optionally, the packet sending manner includes fast packet sending and slow packet sending. For the fast packet sending, after generating the control command in response to the knob instruction, the control device sends the control command to the target smart home device immediately or after short buffer time. For the slow packet sending, after generating the control command in response to the knob instruction, the control device sends the control command to the target smart home device based on buffer time, to avoid stuttering caused by backlogging control commands on the target smart home side. It should be understood that buffer time of the slow packet sending is greater than buffer time of the fast packet sending.

Optionally, a higher adjustment performance capability level of the smart home device indicates a higher device priority and shorter buffer time. For a high-priority smart home device, the control device may send the control command in the fast packet sending manner. For a low-priority smart home device, the control device may send the control command in the slow packet sending manner.

For example, the control device sends, in the fast packet sending manner, the control command to a target smart home device whose adjustment performance capability level is a level 1. The control device sends, in the slow packet sending manner, the control command to target smart home devices whose adjustment performance capability levels are a level 2 to a level 4.

Optionally, the control device may further send the control command to the target smart home device in the slow packet sending manner based on a different adjustment performance capability level of the device and corresponding buffer time.

For example, after generating the control command, the control device determines that the adjustment performance capability level of the target smart home device is a level 2, and may buffer the control command. After the buffer time reaches 200 ms, the control device sends the control command to the target smart home device. For another example, after generating the control command, the control device determines that the adjustment performance capability level of the target smart home device is a level 3, and may buffer the control command. After the buffer time reaches 500 ms, the control device sends the control command to the target smart home device. For example, after generating the control command, the control device determines that the adjustment performance capability level of the target smart home device is a level 4, and may buffer the control command. After the buffer time reaches 1000 ms, the control device sends the control command to the target smart home device.

In this way, compared with a conventional technology in which after generating the control command, the control device directly sends the control command to a smart home device, and in this case, control commands are backlogged due to limited adjustment performance of the smart home device, resulting in long response and waiting time and affecting rotation immediateness performance of the device; in the device control method provided in this embodiment of this application, smart home devices are graded, and control commands are sent to the smart home devices based on different buffer time, to reduce response and waiting time, improve rotation immediateness performance of the devices, avoid stuttering, and improve user experience.

In addition, the control device can control smart home devices with different adjustment performance, and provide graded adjustment effect experience, thereby improving user experience.

For example, for a smart home device whose adjustment performance capability level is a level 1, an optimal effect may be achieved. For a smart home device whose adjustment performance capability level is a level 2 or a level 3, experience with a specific acceptable delay effect may be achieved. For a smart home device whose adjustment performance capability level is a level 4, an adjustment effect is achieved.

In some embodiments, the control command includes a relative command and an absolute command. The relative command indicates the knob indication value. After receiving the relative command, the smart home device determines the target value based on the knob indication value carried in the relative command and a current value of the device, and then adjusts the current value of the device to the target value. The absolute command indicates the target value. After receiving the absolute command, the smart home device adjusts a current value of the device to the target value based on the target value carried in the absolute command.

In some examples, the control device determines, based on the device information, whether the smart home device supports determining the target value based on the knob indication value. Subsequently, after determining the target smart home device based on the knob instruction, the control device may generate the relative command or the absolute command based on whether the target smart home device supports determining the target value based on the knob indication value.

In some examples, the smart home device whose adjustment performance capability level is a level 1 supports determining the target value based on the knob indication value, and may process the relative command. The smart home devices whose adjustment performance capability levels are a level 2 to a level 4 do not support determining the target value based on the knob indication value, but may process the absolute command. In some other examples, a part of or all capability levels of the smart home devices whose adjustment performance capability levels are a level 2 to a level 4 support determining the target value based on the knob indication value, and may process the relative command.

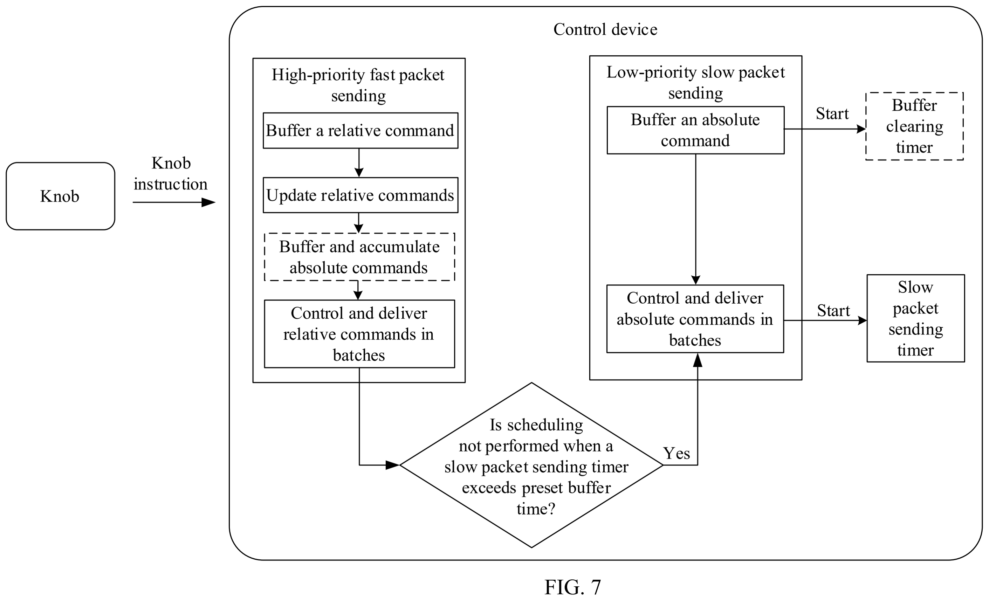

For example, as shown in FIG. 7, after receiving the knob instruction, the control device determines, according to the knob instruction, the target smart home device that the knob instructs to control. If an adjustment performance capability level of the target smart home device is a level 1, the relative command may be generated. The relative command has a high priority, and needs to be delivered in the fast packet sending manner. Then, the control device buffers the relative command to update previous relative commands. Then, the control device delivers the control command (or immediately delivers the relative command) to the target smart home device based on corresponding buffer time. If an adjustment performance capability level of the target smart home device is a level 2 (or a level 3 or a level 4), the control device may generate the absolute command. The absolute command has a low priority, and needs to be delivered in the slow packet sending manner. Then, the control device buffers the absolute command, and starts a slow packet sending timer. The slow packet sending timer collects statistic on buffer time. The control device sends the absolute command to the target smart home device after the buffer time reaches a buffer time requirement corresponding to the adjustment performance capability level.

Optionally, the control device may receive a knob instruction sent by one or more knobs. Optionally, the knob instruction received by the control device may be used to control one or a plurality of smart home devices, and adjustment performance capability levels of the plurality of smart home devices are the same or different.

Optionally, as shown in FIG. 7, in a process of performing high-priority fast packet sending, the control device buffers and accumulates absolute commands generated by other smart home devices with a low adjustment performance capability level. The control device determines, based on a preset period, whether scheduling is not performed when the slow packet sending timer exceeds preset buffer time. If scheduling is not performed, the control device delivers these absolute commands that are not scheduled due to timeout.

Optionally, as shown in FIG. 7, the control device is configured with a buffer clearing timer, and the buffer clearing timer is used by the control device to clear a buffered control command based on the preset period. Optionally, timing duration of the buffer clearing timer is greater than timing duration of the slow packet sending timer. For example, the adjustment performance capability level of the target smart home device is a level 4, and the buffer time is 1000 ms. In this case, after generating the absolute command, the control device sets the timing duration of the slow packet sending timer to 1s, and sets the timing duration of the buffer clearing timer to 5s.

In this way, the control device may also implement graded control of different smart home devices in a multi-device control process based on adjustment performance capability levels of the devices. In addition, a timer is used to avoid missed transmission of a control command.

In some embodiments, after step S601, step S602 to step S605 may be performed multiple times. To be specific, after determining the adjustment performance capability level of the smart home device, the control device may send a corresponding control command in a graded manner based on a subsequently received knob instruction.

In some other embodiments, after adjustment performance of the smart home device is improved (or reduced), the smart home device may send the device information to the control device again, to update the adjustment performance capability level that is of the smart home device and that is stored in the control device. Subsequently, after receiving the knob instruction, the control device may send the control command to the target smart home device based on the updated adjustment performance capability level of the target smart home device.

In this way, as adjustment performance of the target smart home device is upgraded, the control device may adaptively adjust waiting time for sending the control command, to implement adaptive adjustment of an adjustment experience effect and improve user experience.

In some scenarios, a packet loss may occur in a process of sending the control command. In this case, the control device may avoid, through retransmission, a device adjustment exception caused by the packet loss.

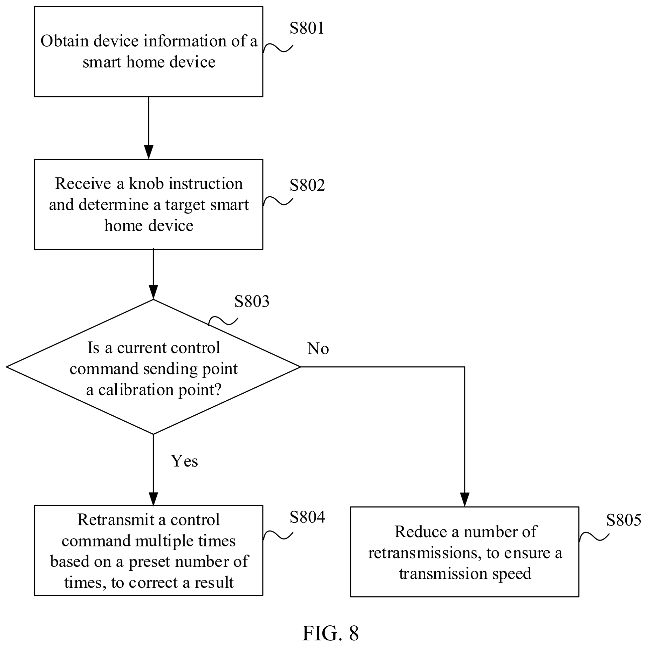

FIG. 8 is another schematic flowchart of a device control method according to an embodiment of this application. It should be noted that the method is not limited to a specific sequence described in FIG. 8 and below. It should be understood that, in another embodiment, a sequence of some steps in the method may be exchanged according to an actual requirement, or some steps in the method may be omitted or deleted. The method includes the following steps.

S801: A control device obtains device information of a smart home device.

S802: The control device receives a knob instruction and determines a target smart home device.

Optionally, for detailed content of step S801 and step S802, refer to related content of step S601 and step S602. Details are not described again in this embodiment of this application.

S803: The control device determines whether a current control command sending point is a calibration point; and if the current control command sending point is a calibration point, performs step S804; or if the current control command sending point is not a calibration point, performs step S805.

S804: The control device retransmits a control command multiple times based on a preset number of times, to correct a result.

S805: The control device reduces a number of retransmissions, to ensure a transmission speed.

In some embodiments, the knob instruction includes a rotation status, and the rotation status is rotation start (or described as rotation initiation), rotating, or rotation stop (or described as rotation halt). The control device sets a rotation start point and a rotation stop point as calibration points. For example, after receiving a knob instruction sent by a knob, the control device determines that a rotation status carried in the knob instruction is rotation start, and then the control device sets a current control command sending point to a calibration point. For another example, after receiving a knob instruction sent by a knob, the control device determines that a rotation status carried in the knob instruction is rotation stop, and then the control device sets a current control command sending point to a calibration point.

In some other embodiments, during rotation of the knob, to avoid a packet loss exception, the control device may further set a corresponding calibration point based on an accumulated value corresponding to the received knob instruction. For example, a calibration point of a preset accumulated value is 10. After the control device receives the knob instruction that is sent by the knob and instructs rotation start, and sets a calibration point corresponding to the rotation start, in a subsequent process of receiving the knob instruction, if the control device determines that an accumulated value difference between the accumulated value corresponding to the current knob instruction and an accumulated value corresponding to a last calibration point is greater than or equal to the preset accumulated value, the control device sets a current control command sending point as a calibration point; or if the control device determines that an accumulated value difference between the accumulated value corresponding to the current knob instruction and an accumulated value corresponding to a last calibration point is less than the preset accumulated value, the control device sets a current control command sending point to a non-calibration point.

For example, the knob sends the knob instruction to the control device at a specific time interval. In this case, based on different speeds at which a user rotates the knob, knob indication values carried in knob instructions reported by the knob each time are the same or different. In a rotation process, the control device receives a knob instruction A reported by the knob, where the knob instruction A instructs rotation start, and a knob indication value is +10. In this case, a calibration point may be set. Then, the control device receives a knob instruction B reported by the knob, where a knob indication value carried by the knob instruction B is +1. The control device determines that an accumulated value corresponding to the current knob instruction B is +11, and a difference between the accumulated value corresponding to the current knob instruction B and the accumulated value corresponding to the last calibration point +10 is 1, which is less than the preset accumulated value 10. In this case, a non-calibration point may be set. Then, the control device receives a knob instruction C reported by the knob, where a knob indication value carried by the knob instruction C is +5. The control device determines that an accumulated value corresponding to the current knob instruction C is +16, and a difference between the accumulated value corresponding to the current knob instruction C and the accumulated value corresponding to the last calibration point +10 is 6, which is less than the preset accumulated value 10. In this case, a non-calibration point may be set. Then, the control device receives a knob instruction D reported by the knob, where a knob indication value carried by the knob instruction D is +4. The control device determines that an accumulated value corresponding to the current knob instruction D is +20, and a difference between the accumulated value corresponding to the current knob instruction D and the accumulated value corresponding to the last calibration point +10 is 10, which is equal to the preset accumulated value 10. In this case, a non-calibration point may be set. Then, the control device receives a knob instruction E reported by the knob, where a knob indication value carried by the knob instruction E is +12. The control device determines that an accumulated value corresponding to the current knob instruction E is +32, and a difference between the accumulated value corresponding to the current knob instruction E and the accumulated value corresponding to the last calibration point +20 is 12, which is equal to the preset accumulated value 10. In this case, a calibration point may be set (where alternatively, based on a condition that a knob indication value currently carried by the knob instruction E is greater than or equal to the preset accumulated value, a current point may be directly set as a calibration point).

In some embodiments, the control device sends the generated control command to the target smart home device at the calibration point through multiple retransmissions.

In some examples, the control device also sends the control command to the target smart home device at the non-calibration point through multiple retransmissions. In this case, a number of retransmissions that the control device sends the control command at the calibration point is greater than or equal to a number of retransmissions that the control device sends the control command at the non-calibration point.

In some examples, the target smart home device supports determining a target value based on the knob indication value. The control device generates a cumulative change value according to the received knob instruction, and includes the cumulative change value in a corresponding control command. After receiving the control command, the target smart home device determines that the control command is a control command corresponding to rotation start, and may set a current value of the device as a reference value. Subsequently, the target smart home device determines the target value based on the reference value and the received cumulative change value, and adjusts the current value of the device to the target value.

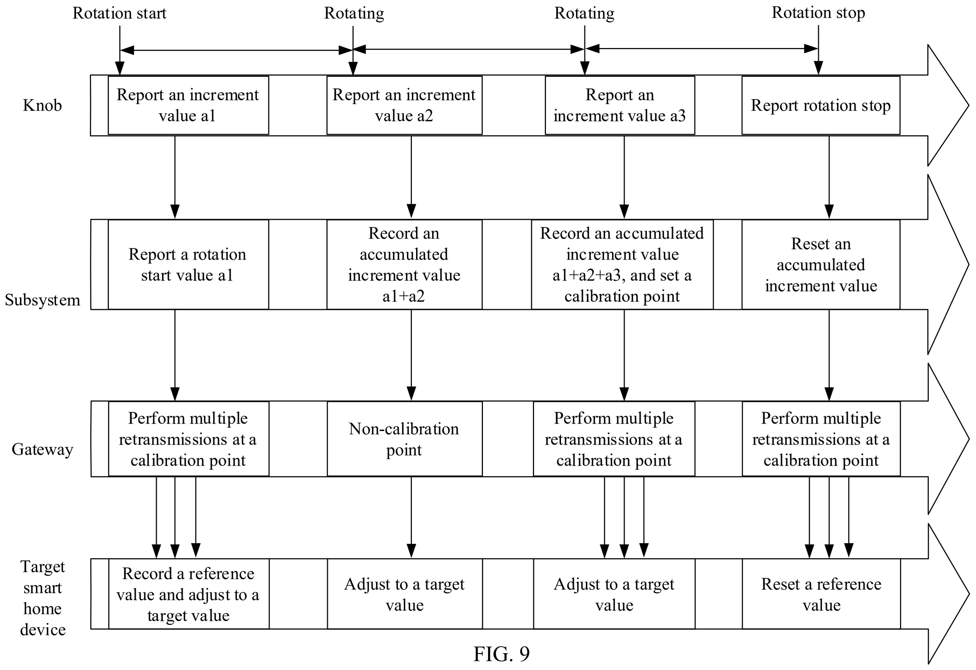

For example, as shown in FIG. 9, after receiving a control command sent by a subsystem, a gateway forwards the control command to the target smart home device. A packet loss exception is likely to occur during forwarding of the control command. Therefore, the gateway performs multiple retransmissions at the calibration point, to ensure that the target smart home device can be subsequently and correctly adjusted to the target value. In addition, at the non-calibration point, the gateway sends the control command through a single transmission or a small number of retransmissions, to improve efficiency of sending the control command.

For example, the subsystem receives the knob instruction sent by the knob, and determines that an increment value a1 reported by the knob is +1, and the rotation status is rotation start. In this case, the control device generates a control command, sets a current point as a calibration point, and may send the control command to the target smart home device through multiple retransmissions. After receiving the control command, the target smart home device determines, based on the increment value a1 indicated by the control command and the current value (for example, 20) of the device, that the target value is 21, and may adjust the current value of the device to the target value. In addition, the target smart home device sets the current value of the device to a reference value based on calibration information currently corresponding to rotation start (or based on a condition that a same control command is received multiple times for the first time).

Then, the subsystem re-receives the knob instruction sent by the knob, and determines that an increment value a2 reported by the knob is +3, and the rotation status is rotating. In this case, the control device records the accumulated increment value as a1+a2=+4. The control device generates a control command, and sets a current control command sending point to a non-calibration point based on a condition that an accumulated value difference between the accumulated value corresponding to the current knob instruction and the accumulated value corresponding to the last calibration point is less than the preset accumulated value 10. Then, the subsystem sends the control command to the gateway, and includes non-calibration point information and the accumulated increment value in the control command. After receiving the control command, the gateway determines that a current point is a non-calibration point, and may directly send the control command to the target smart home device not through retransmission. If a packet loss exception occurs and the target smart home device fails to receive the control command, the target smart home device still keeps running with a previous target value (for example, 21).

Then, the subsystem re-receives the knob instruction sent by the knob, and determines that an increment value a3 reported by the knob is +7, and the rotation status is rotating. For example, the control device records an accumulated increment value as a1+a2+a3=+11, generates a control command, and sets a current control command sending point to a calibration point based on a condition that an accumulated value difference between the accumulated value corresponding to the current knob instruction and the accumulated value corresponding to the last calibration point is equal to the preset accumulated value 10. Then, the subsystem sends the control command to the gateway, and includes the calibration point information in the control command. After receiving the control command, the gateway determines that the current point is a calibration point, and may send the control command to the target smart home device through multiple retransmissions. After receiving the control command, the target smart home device determines, based on the accumulated increment value indicated by the control command and the reference value, that the target value is 20+11=31, and may adjust the current value of the device to the target value. In this way, even if a packet loss exception occurs in a process in which the knob controls the target smart home device, a final control result may be calibrated through multiple retransmissions, thereby ensuring that the control result meets a user requirement.

Then, the subsystem re-receives the knob instruction sent by the knob, and determines that the rotation status reported by the knob is rotation stop. In this case, the control device may generate a control command, and set a current control command sending point as a calibration point. In addition, the control device resets the increment value, so that a new increment value is recorded after a new control process is subsequently triggered. Then, the subsystem sends the control command to the gateway, and includes the calibration point information in the control command. After receiving the control command, the gateway determines that the current point is a calibration point, and may send the control command to the target smart home device through multiple retransmissions. After receiving the control command, the target smart home device determines that the control command indicates rotation stop, the reference value may be reset, for example, the current value of the device is set to the reference value again, so that the reference value is adjusted after a new control process is triggered subsequently.

In some examples, based on different communication manners, the gateway may be a plurality of types of gateways, for example, a Bluetooth gateway or a PLC gateway.

In some examples, when a data processing environment is busy, a packet loss exception is likely to occur. Alternatively, when an accumulated number of control commands that are not processed by the target smart home device exceeds a preset threshold, a packet loss exception is also likely to occur. Alternatively, another exception factor may cause a packet loss exception. Examples are not enumerated in this embodiment of this application.

It should be understood that, in the foregoing process, based on different buffer time, the gateway may receive a new control command in a process of buffering the control command. In addition, the subsystem may also be used to generate the target value. In a scenario in which the subsystem generates the target value, accuracy of the control result may also be improved through multiple retransmissions.

In this way, the calibration point and the non-calibration point are set, so that at the non-calibration point, a speed of sending a control command is ensured by reducing a number of retransmissions, to improve overall communication performance; and at the calibration point, a number of retransmissions is increased, to increase a success rate of sending a control command (for example, a success rate of 99.9%).

In addition, at the calibration point, an effect of correcting a control result can be achieved, thereby reducing impact of a packet loss exception.

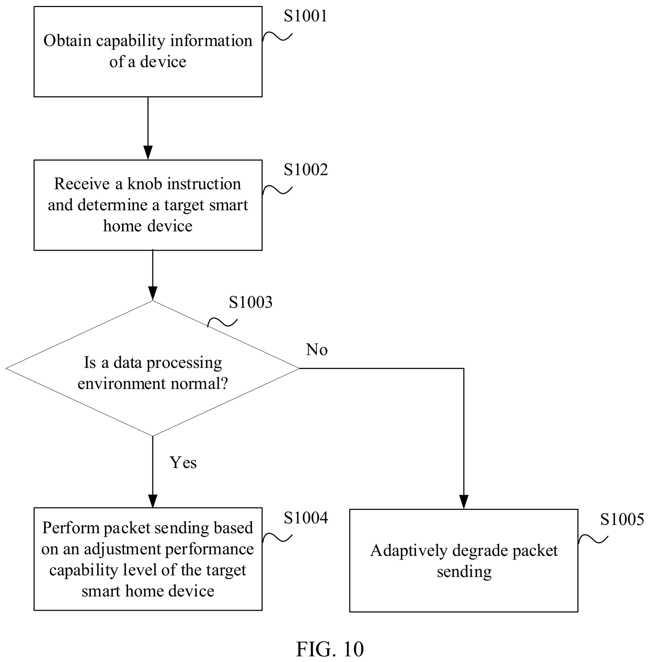

In addition, with reference to the methods shown in FIG. 6 and FIG. 10, the control device improves control command transmission accuracy while maximizing device adjustment performance of the smart home device, and providing smooth control experience, to improve a control effect.

In some scenarios, in a communication scenario, sending a message occupies a transmission resource, causing the data processing environment to be busy. However, when the data processing environment is busy, a message transmission success rate is affected. For example, the control device may receive an instruction that is used to control the smart home device and that is sent by a plurality of knobs or another operation device, or receive a response fed back by the smart home device, which affects a busy degree of operating the data processing environment. In this case, the control device may adaptively adjust the packet sending speed of the control command based on the busy degree of the data processing environment.

FIG. 10 is another schematic flowchart of a device control method according to an embodiment of this application. It should be noted that the method is not limited to a specific sequence described in FIG. 10 and below. It should be understood that, in another embodiment, a sequence of some steps in the method may be exchanged according to an actual requirement, or some steps in the method may be omitted or deleted. The method includes the following steps.

S1001: A control device obtains device information of a smart home device.

S1002: The control device receives a knob instruction and determines a target smart home device.

Optionally, for detailed content of step S1001 and step S1002, refer to related content of step S601 and step S602. Details are not described again in this embodiment of this application.

S1003: The control device determines whether a current data processing environment is normal; and if the current data processing environment is normal, performs step S1004; or if the current data processing environment is not normal, performs step S1005.

S1004: The control device performs packet sending based on an adjustment performance capability level of the target smart home device.

S1005: The control device adaptively degrades packet sending.

In some embodiments, the control device adaptively adjusts buffer time of a control command based on a busy degree of the data processing environment.

In some examples, a data processing environment detection module is configured in the control device. After receiving the knob instruction, the control device determines a busy degree of the current data processing environment by using the data processing environment detection module. Optionally, the data processing environment detection module determines the busy degree of the current data processing environment based on a time interval of receiving a message by the control device and message processing duration.

In some examples, the control device sets, to basic buffer time corresponding to the smart home device, buffer time corresponding to the adjustment performance capability level indicated in the method shown in FIG. 6. When the data processing environment is normal, the control device sends a control command to the target smart home device based on basic buffer time corresponding to the target smart home device. When the data processing environment is busy, the control device adaptively generates adjusted buffer time based on basic buffer time corresponding to the target smart home device, and sends a control command to the target smart home device based on the adjusted buffer time.

In some examples, the control device classifies busy degrees of the data processing environment into five busy levels in ascending order. Then, corresponding packet sending buffer time adjustment values are automatically matched at different busy levels, so that the control device determines, based on the packet sending buffer time adjustment value and the basic buffer time corresponding to the target smart home device, buffer time corresponding to the current target smart home device.

It should be understood that, based on an actual busy degree of the data processing environment, a busy level of the data processing environment may include more or fewer levels. This is not limited in embodiments of this application.

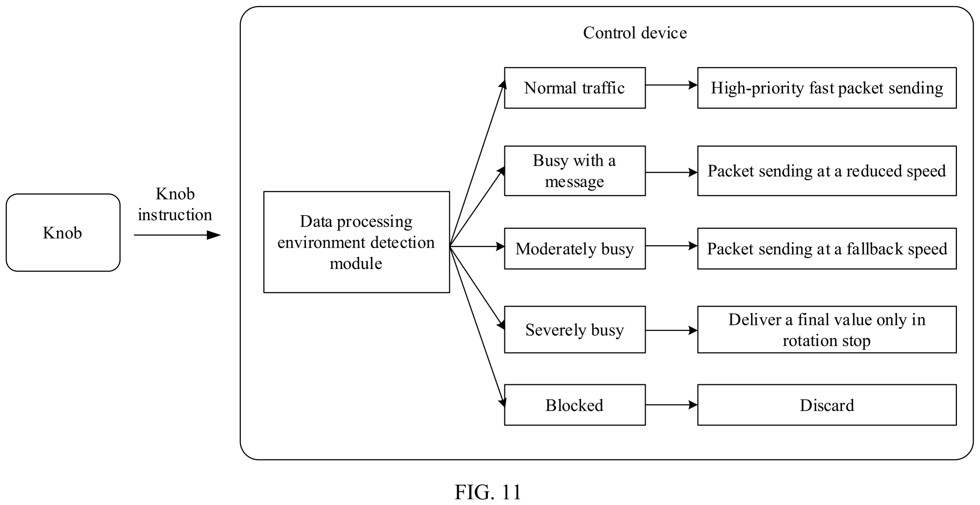

For example, as shown in FIG. 11, when the data processing environment is normal, the control device matches a packet sending buffer time adjustment value of 0, and the control device may implement high-priority fast packet sending. For example, for a target smart home device whose adjustment performance level is a level 1, when the data processing environment is normal, the control device immediately sends the control command to the target smart home device after generating a control command.

For another example, as shown in FIG. 11, when the data processing environment is busy with a message, the control device matches a packet sending buffer time adjustment value of 500 ms, and the control device may implement packet sending at a reduced speed, and ensure a packet sending success rate by sacrificing smooth experience. For example, for a target smart home device whose adjustment performance level is a level 1, when the data processing environment is busy with a message, the control device generates a control command, and then sends the control command to the target smart home device after buffer time of 500 ms.

For another example, as shown in FIG. 11, when the data processing environment is moderately busy with a message, the control device matches a packet sending buffer time adjustment value of 1000 ms, and the control device can implement packet sending at a fallback speed, and provide an acceptable adjustment effect for the user while ensuring a packet sending success rate. For example, for a target smart home device whose adjustment performance level is a level 1, when the data processing environment is moderately busy with a message, the control device generates a control command, and then sends the control command to the target smart home device after buffer time of 1000 ms.

For another example, as shown in FIG. 11, when the data processing environment is severely busy with a message, after receiving the knob instruction, the control device temporarily does not generate the control command, but generates the control command indicating a final accumulated rotation value, only after receiving the knob instruction indicating halt rotation. Then, the control device sends the control command to the target smart home device, to indicate the target smart home device to adjust a current value of the device based on the final accumulated rotation value, so as to achieve a device-controllable effect.

For another example, as shown in FIG. 11, when the data processing environment is in a blocked state, after receiving a knob instruction, the control device discards the knob instruction, to avoid blocking and crash in a communication environment.

In this way, the control device adaptively adjusts, based on the data processing environment, buffer time for sending the control command, and achieves a dynamic balance control effect according to a fast packet sending strategy and a degraded packet sending strategy.

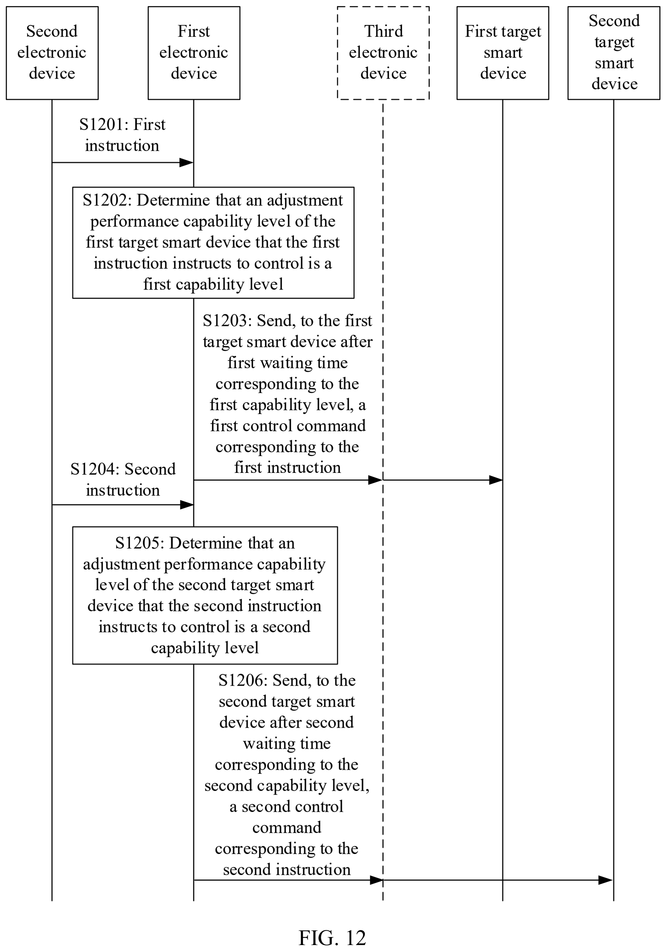

FIG. 12 is another schematic flowchart of a device control method according to an embodiment of this application. It should be noted that the method is not limited to a specific sequence described in FIG. 12 and below. It should be understood that, in another embodiment, a sequence of some steps in the method may be exchanged according to an actual requirement, or some steps in the method may be omitted or deleted. The method includes the following steps.

S1201: A first electronic device receives a first instruction sent by a second electronic device.

In some examples, the second electronic device is a device operated by a user, such as a knob, and the first electronic device is a device configured to manage a smart device, such as a smart home cloud or a subsystem.

In some embodiments, after generating the first instruction in response to a user operation, the second electronic device sends the first instruction to the first electronic device, and correspondingly the first electronic device may receive the first instruction.

In some examples, the first instruction includes a knob indication value and a rotation status. The knob indication value is an adjustment value determined by the second electronic device in response to the user operation. The rotation status describes an operating status of the second electronic device. The operating status includes, for example, rotation start (or described as rotation initiation), rotating, or rotation stop (or described as rotation halt).

In some examples, after detecting a rotation start operation of the user, the second electronic device sends the first instruction to the first electronic device based on a preset period. In some examples, in response to a speed at which the user operates the first electronic device, knob indication values included in different first instructions are the same or different.

S1202: The first electronic device determines that an adjustment performance capability level of a first target smart device that the first instruction instructs to control is a first capability level.

In some embodiments, the first instruction further includes an identifier of the first target smart device correspondingly controlled by the second electronic device. For example, if the second electronic device is a knob used to control a smart air conditioner, the first instruction may carry an identifier of the smart air conditioner. In view of this, after receiving the first instruction, the first electronic device can determine, based on the identifier carried in the first instruction, the first target smart device that the first instruction instructs to control.

In some other examples, the first electronic device is configured to manage different smart devices, and the first electronic device stores correspondences between different second electronic devices and corresponding target smart devices. For example, information stored in the first electronic device includes that a knob 1 is used to control a smart air conditioner and a knob 2 is used to control a smart light. In view of this, after receiving the first instruction, the first electronic device can determine, based on the second electronic device that sends the first instruction, a first target smart device currently corresponding to the second electronic device, where the first target smart device is a smart device that the first instruction instructs to control.

In some embodiments, when connecting to the first electronic device, the smart device sends device information of the smart device to the first electronic device. In some examples, the smart device sends, to the first electronic device, information for connecting to the first electronic device, where the information includes the device information. In some other examples, after connecting to the first electronic device, the smart device independently sends the device information to the first electronic device.

The device information is information indicating adjustment performance of the smart device. Optionally, a smart device with high adjustment performance supports determining a target value based on a knob indication value, and a smart device with low adjustment performance does not support determining a target value based on a knob indication value. Alternatively, a smart device with high adjustment performance can quickly process a received control command, and a smart device with low adjustment performance needs more time to process a received control command. Optionally, computing power of the smart device affects adjustment performance of the smart device.

In some examples, the first electronic device receives device information sent by the first target smart device. The first electronic device determines the adjustment performance capability level of the first target smart device based on the device information. Optionally, the device information includes whether the first target smart device supports calculation of the target value and/or a time length for the first target smart device to process the first control command.

In some examples, the first electronic device is a device having a gateway function, and the first electronic device may directly receive the device information sent by the first target smart device. In some other examples, the first electronic device may alternatively receive, by using a third electronic device, the device information sent by the first target smart device, where the third electronic device is a gateway device (or a router or the like) or a device having a gateway function.

In some embodiments, an adjustment performance capability level of the smart device may be classified based on an adjustment performance capability of the smart device. For example, there are four adjustment performance capability levels. A level 1 represents the highest level with the highest adjustment performance, and a level 4 represents the lowest level with the lowest adjustment performance.

In some examples, after receiving the device information of the first target smart device, the first electronic device can determine the adjustment performance capability level of the first target smart device based on the device information, and store a correspondence between the first target smart device and the adjustment performance capability level of the first target smart device. In this case, after receiving the first instruction, the first electronic device can determine the first target smart device that the first instruction instructs to control, and further determine the adjustment performance capability level of the first target smart device, for example, the first capability level.

S1203: The first electronic device sends, to the first target smart device after first waiting time corresponding to the first capability level, a first control command corresponding to the first instruction.

In some embodiments, a capability for processing a control command varies depending on different adjustment performance capability levels of smart devices. Therefore, waiting time corresponding to different adjustment performance capability levels may be matched in advance, and the waiting time indicates time for which the first electronic device needs to wait after receiving an instruction sent by the second electronic device and before sending a control command, to a corresponding target smart device, corresponding to the instruction. In this way, the waiting time avoids a case in which a smart device with a low performance capability level frequently receives a control command, but control commands are stacked due to insufficient processing capabilities, causing an operation response delay and affecting user experience.

It should be understood that, due to factors such as a device processing capability and a data processing environment, after the first electronic device obtains preset waiting time corresponding to an adjustment performance capability level, a specific error exists between waiting time for actually sending a control command and obtained waiting time corresponding to the adjustment performance capability level.

In some embodiments, the first electronic device stores different waiting time corresponding to different adjustment performance capability levels. Then, after determining the first capability level of the first target smart device, the first electronic device may determine the first waiting time corresponding to the first capability level. Then, after generating the first control command corresponding to the first instruction, the first electronic device may wait for the first waiting time to send the first control command to the first target smart device.

In some examples, the knob indication value indicated by the first instruction is a relative adjustment value. The first control command is a relative command or an absolute command. The relative command indicates the first target smart device to generate a target value based on an adjustment value indicated by the relative command, and adjust a current value of the device to the target value. The absolute command indicates the target value, and indicates the first target smart device to adjust the current value of the device to the target value.

In some examples, the first electronic device may determine, based on a device capability of the first target smart device, whether the sent first control command is a relative command or an absolute command.

For example, as shown in FIG. 7, the first electronic device (for example, a control device) determines, based on the first capability level of the first target smart device, to send the first control command (for example, a packet) in a high-priority fast packet sending manner or send the first control command in a low-priority slow packet sending manner. Optionally, after generating the first control command, the first electronic device may start a timer, to send the first control command to the first target smart device after the first waiting time.

In some scenarios, in a process of sending a control command, a packet loss exception may occur. As a result, a result of executing the control command by the smart device cannot meet a user requirement. In this case, the first electronic device may avoid, through retransmission, a device adjustment exception caused by a packet loss.

For example, the first electronic device sends a control command 1 to the smart device, to indicate the smart device to increase the current value of the device by 1. After receiving the control command 1, the smart device adjusts the current value of the device from 0 to 1. Then, the first electronic device sends a control command 2 to the smart device, to indicate the smart device to increase the current value of the device by 10. However, due to the packet loss exception, the smart device fails to receive the control command 2, and therefore cannot adjust the current value of the device, but keeps running based on a device value of +1. It is clear that a use requirement of the user cannot be met.

In some embodiments, the first electronic device indicates, in a manner of setting a calibration point, to retransmit the control command multiple times at a location of the calibration point, so as to reduce a packet loss rate and ensure that adjustment can be performed on the smart device according to the control command.

In some embodiments, after receiving the first instruction sent by the second electronic device, the first electronic device determines that the first instruction meets a preset condition, and sets the calibration point based on information carried in the first instruction.

In some examples, the preset condition includes any one of the following: The first instruction is an instruction for starting controlling the first target smart device for the first time, the first instruction is an instruction for stopping controlling the first target smart device, or a difference between an accumulated value corresponding to the first instruction and an accumulated value corresponding to a last calibration point is greater than or equal to a preset value.

In this way, the first electronic device sets the calibration point during rotation start, to ensure that the smart device can receive a control command corresponding to the rotation start and can record a reference value. This ensures accuracy of a subsequent adjustment process. The first electronic device sets the calibration point during rotation stop, to ensure that the smart device can receive a control command corresponding to the rotation stop, and therefore ensure that a final device adjustment effect meets a user requirement. In a rotation process, the first electronic device can set the calibration point when the accumulated value is large, to ensure that the smart device can receive a corresponding accumulated value when the adjustment value changes greatly. This avoids a large difference between exception adjustment and a user requirement or long abnormal time, so that user experience is not affected.

In some examples, after setting the calibration point, the first electronic device marks an accumulated value of the calibration point.

In some examples, the first electronic device marks the calibration point and a non-calibration point by using different values. For example, the first electronic device marks the accumulated value of the calibration point as 1, and marks an accumulated value of the non-calibration point as 0; or the first electronic device marks the accumulated value of the calibration point as 0, and marks an accumulated value of the non-calibration point as 1. For another example, the first electronic device marks the accumulated value of the calibration point as 1 or 0, but does not mark the non-calibration point. In this way, the first electronic device (or a gateway) can determine, based on a marked value, whether a corresponding control command needs to be retransmitted, where the control command carries an accumulated value.

In some examples, when the first instruction meets the preset condition, after the first waiting time, the first electronic device sends the first control command to the first target smart device based on a first number of retransmissions. When the first instruction does not meet the preset condition, after the first waiting time, the first electronic device sends the first control command to the first target smart device based on a second number of retransmissions. The first number of retransmissions is greater than the second number of retransmissions, and the second number of retransmissions is an integer greater than or equal to 0.

In some other examples, the third electronic device is a device having a gateway function or a gateway device, and the first electronic device implements retransmission by using the third electronic device. For example, the first electronic device sends the first control command to the third electronic device, where the first control command carries first calibration information. In this case, the third electronic device sends, based on the first number of retransmissions, the first control command to the first target smart device that the first control command indicates to control. The first electronic device sends a fifth control command to the third electronic device, where the fifth control command does not carry the first calibration information or carries second calibration information. In this case, the third electronic device sends, based on the second number of retransmissions, the fifth control command to the first target smart device that the fifth control command indicates to control. The first number of retransmissions is greater than the second number of retransmissions.

Optionally, if a control command sent by the first electronic device to the third electronic device carries calibration information, the third electronic device sends, through retransmission, the control command to a target smart device that the control command indicates to control, where the control command may carry or not carry the calibration information. Alternatively, if a control command sent by the first electronic device does not carry calibration information, the third electronic device sends, not through retransmission, the control command to a target smart device that the control command indicates to control. Alternatively, if a control command sent by the first electronic device carries calibration information indicating whether a calibration point is involved, after receiving the control command, the third electronic device determines, based on the calibration information carried in the control command, whether the control command needs to be retransmitted.

Optionally, the first control command sent by the first electronic device or the third electronic device to the first target smart device does not carry calibration information. Alternatively, the first control command sent by the first electronic device or the third electronic device to the first target smart device carries calibration information, and after receiving the first control command, the first target smart device does not process the calibration information carried in the first control command.

For example, as shown in FIG. 9, the subsystem (for example, the first electronic device) determines, based on a received increment value reported by the knob (for example, the second electronic device), whether a calibration point is to be set. After the calibration point is set, the calibration information is sent to the gateway (for example, the third electronic device). In this way, the gateway can determine, based on the calibration information, to retransmit the control command to the target smart home device (for example, the first target smart device) multiple times.

In some embodiments, after receiving the first control command and performing a corresponding operation, the first target smart device may not need to send an execution result to the first electronic device. In this case, the first electronic device does not wait for a feedback from the first target smart device. For example, the first electronic device or the third electronic device sends the first control command to the first target smart device in a Bluetooth broadcast manner. In this case, the first target smart device does not need to feed back the execution result of the first control command.

For example, that after the first waiting time, the first electronic device sends the first control command to the first target smart device based on the first number of retransmissions includes: After the first waiting time, the first electronic device sends the first control command to the first target smart device for the first number of retransmissions. To be specific, the first electronic device does not need to pay attention to the result of executing the first control command by the first target smart device, but only needs to complete retransmission of the first control command based on a preset number of retransmissions.

It should be understood that the first electronic device may alternatively send the first control command to the third electronic device, and the third electronic device sends the first control command for the first number of retransmissions.

In some embodiments, after receiving the first control command and performing a corresponding operation, the first target smart device sends an execution result to the first electronic device. In this case, the first electronic device waits for the execution result fed back by the first target smart device, and determines, based on the execution result, whether to continue to retransmit the first control command. For example, the first electronic device or the third electronic device sends the first control command to the first target smart device in a PLC manner. In this case, the first target smart device needs to feed back the execution result of the first control command. For example, if the first electronic device determines, based on the execution result fed back by the first target smart device, that the first control command is successfully executed, the first electronic device may stop retransmitting the first control command. For another example, if the first electronic device determines, based on the execution result fed back by the first target smart device, that the first control command fails to be executed, the first electronic device may continue to retransmit the first control command until the first electronic device receives a feedback indicating that the first control command is successfully executed or completes retransmission for the first number of retransmissions.

For example, that after the first waiting time, the first electronic device sends the first control command to the first target smart device based on the first number of retransmissions includes: After the first waiting time, the first electronic device determines, based on the first number of retransmissions, a maximum number of times of sending the first control command to the first target smart device, where the maximum number of times is the first number of retransmissions.

It should be understood that the first electronic device may alternatively send the first control command to the third electronic device, and the third electronic device sends the first control command for the maximum first number of retransmissions.

In some embodiments, the first electronic device receives a third instruction sent by the second electronic device. The first electronic device determines that the third instruction is used to control the first target smart device. In this case, the first electronic device determines, based on an adjustment value indicated by the third instruction and a first accumulated value corresponding to a fourth instruction that is received last time and used to control the first target smart device, a second accumulated value corresponding to the third instruction. The first electronic device sends a third control command to the first target smart device after the first waiting time, where the third control command carries the second accumulated value.

For example, as shown in FIG. 9, the subsystem (for example, the first electronic device) receives the third instruction reported by the knob (for example, the second electronic device), where the third instruction carries an increment value a3. Based on the increment value a3 and an accumulated increment value a1+a2 (namely, the first accumulated value) corresponding to an increment value a2 carried in the fourth instruction reported last time, the subsystem may obtain an accumulated increment value a1+a2+a3 (namely, the second accumulated value) corresponding to the third instruction reported this time. In this case, the subsystem may send the third control command to the target smart home device (for example, the first target smart device), where the third control command carries the increment value a1+a2+a3.

In some embodiments, the smart device receives the first control command sent by the first electronic device, where the first control command indicates to start control. In response to the first control command, the smart device stores a current value of the device as a reference value. The smart device receives a fifth control instruction sent by the first electronic device, determines a target value based on an accumulated value indicated by the fifth control instruction and the reference value, and adjusts the current value of the device to the target value.

For example, as shown in FIG. 9, the subsystem (for example, the first electronic device) receives an instruction reported by the knob (for example, the second electronic device), where a knob status corresponding to the instruction is rotation start, and the instruction carries a rotation start value a1. In this case, the first electronic device sends, to the target smart home device, a control command corresponding to the instruction. After receiving the control command, the target smart home may determine that the control command indicates to start control. The target smart home may obtain a current value of the device, and set the current value of the device as a reference value. Then, after determining an accumulated increment value based on a received increment value reported by the knob, the subsystem sends the accumulated increment value to the target smart home device. The target smart home device may determine a target value based on the reference value and the accumulated increment value, and adjust the current value of the device to the target value. In this way, in a subsequent adjustment process of the target smart home device, even if a packet loss exception occurs, the target smart home device can still receive, through retransmission, at least an accumulated increment value sent by the subsystem (or the gateway) through retransmission. In this way, the target smart home device can also adjust the device to a correct increment value based on the reference value and a subsequently received accumulated increment value, and correct an exception in time, so that a problem that the device is always in an abnormal target value does not occur, thereby improving user experience.

In some scenarios, in a communication scenario, sending a message occupies a transmission resource, causing the data processing environment to be busy. However, when the data processing environment is busy, a message transmission success rate is affected. Therefore, the first electronic device may alternatively monitor the data processing environment, and adjust, based on the data processing environment, waiting time for sending the first control command.

In some examples, after receiving the first instruction sent by the second electronic device, the first electronic device monitors the data processing environment. When the adjustment performance capability level of the first target smart device is the first capability level, and the data processing environment belongs to a first data processing environment level, after the first waiting time, the first electronic device sends the first control command to the first target smart device. When the adjustment performance capability level of the first target smart device is the first capability level, and the data processing environment belongs to a second data processing environment level, after third waiting time, the first electronic device sends the first control command to the first target smart device. A busy degree indicated by the second data processing environment level is greater than a busy degree indicated by the first data processing environment level, and the third waiting time is waiting time that is determined based on the first waiting time and that is greater than the first waiting time.

In this way, the first electronic device adaptively adjusts waiting time based on a busy degree of the data processing environment, to improve a packet sending success rate and avoid blocking and crash in the communication environment.

In some examples, the first electronic device may alternatively use different control command packet sending manners depending on a data processing environment level. For example, as shown in FIG. 11, the first electronic device classifies the data processing environment into five levels, and processes the control command in different manners at different data processing environment levels.

For example, as shown in FIG. 11, the first electronic device receives an instruction sent by the second electronic device, and determines that the data processing environment is currently normal traffic. In this case, based on waiting time corresponding to an adjustment performance capability level of a target smart device that the instruction instructs to control, after the waiting time, the first electronic device may directly send, to the target smart device, a control command corresponding to the instruction.

For another example, as shown in FIG. 11, the first electronic device receives an instruction sent by the second electronic device, and determines that the data processing environment is currently busy with a message. In this case, the first electronic device determines that packet sending needs to be currently performed at a reduced speed. In this case, the first electronic device may obtain waiting time corresponding to an adjustment performance capability level of a target smart device that the instruction instructs to control, and increase the waiting time to obtain new waiting time. For example, the waiting time corresponding to the adjustment performance capability level of the target smart device is 500 ms, and the new waiting time after adjustment is 1000 ms. Then, after the new waiting time, the first electronic device sends, to the target smart device, a control command corresponding to the instruction.

For another example, the first electronic device receives a fifth instruction sent by the second electronic device, where the fifth instruction instructs to control the first target smart device. The first electronic device determines that the data processing environment is in a severely busy state. In this case, when the fifth instruction is an instruction for stopping controlling the first target smart device, the first electronic device sends, to the first target smart device, a fourth control command corresponding to the fifth instruction. For example, as shown in FIG. 11, when the data processing environment is severely busy, the first electronic device sends, to the target smart device only when receiving an instruction that a state of the knob is rotation stop, a control command corresponding to the instruction.

For another example, the first electronic device receives a sixth instruction sent by the second electronic device, where the sixth instruction instructs to control the first target smart device. The first electronic device determines that the data processing environment is in a blocked state. The first electronic device discards the sixth instruction. For example, as shown in FIG. 11, when the data processing environment is in the blocked state, the first electronic device directly discards the received instruction, to avoid communication crash caused by sending a control command corresponding to the instruction.

S1204: The first electronic device receives a second instruction sent by the second electronic device.

In some examples, the first instruction and the second instruction that are received by the first electronic device may be instructions sent by a same second electronic device, or may be instructions sent by different second electronic devices.

For example, the second electronic device is a knob, and one knob may be used to control one or more smart devices.

S1205: The first electronic device determines that an adjustment performance capability level of a second target smart device that the second instruction instructs to control is a second capability level.

S1206: The first electronic device sends, to the second target smart device after second waiting time corresponding to the second capability level, a second control command corresponding to the second instruction

Optionally, for detailed content of step S1204 to step S1206, refer to related content of step S1201 to step S1203. Details are not described again in this embodiment of this application.

The adjustment performance capability level of the second target smart device is different from the adjustment performance capability level of the first target smart device, and the first electronic device may respectively match different waiting time for the first target smart device and the second target smart device based on different adjustment performance capability levels.

In this way, the first electronic device can control smart devices with different adjustment performance, and provide graded adjustment effect experience, thereby improving user experience.

Optionally, the first electronic device may further perform the steps and functions performed by the control device in the foregoing embodiments, the second electronic device may further perform the steps and functions performed by the knob in the foregoing embodiments, the third electronic device may further perform the steps and functions performed by the gateway in the foregoing embodiments, and the smart device may further perform the steps and functions performed by the smart home device in the foregoing embodiments, to implement the device control method provided in the foregoing embodiments.

In this way, the first electronic device adaptively adjusts, based on an adjustment performance capability of the smart device, an accumulated value corresponding to an instruction, and the data processing environment, waiting time and a number of times of sending a control command, to achieve a dynamic balance control effect and improve a use effect of the user.

The foregoing describes in detail the device control method provided in embodiments of this application with reference to FIG. 6 to FIG. 12. The following describes in detail the electronic device provided in embodiments of this application with reference to FIG. 12.

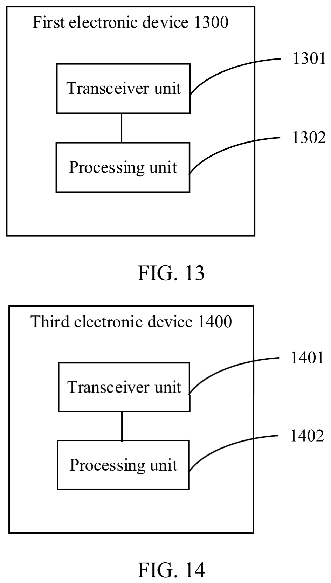

In a possible design, FIG. 13 is a diagram of a structure of a first electronic device according to an embodiment of this application. As shown in FIG. 13, the first electronic device 1300 may include a transceiver unit 1301 and a processing unit 1302. The first electronic device 1300 may be configured to implement functions of the first electronic device (for example, the control device) in the foregoing method embodiments.

Optionally, the transceiver unit 1301 is configured to support the first electronic device 1300 in performing S601, S602, S604, and S605 in FIG. 6, and/or is configured to support the first electronic device 1300 in performing S801, S802, S804, and S805 in FIG. 8, and/or is configured to support the first electronic device 1300 in performing S1001, S1002, S1004, and S1005 in FIG. 10, and/or is configured to support the first electronic device 1300 in performing S1201, S1203, S1204, and S1206 in FIG. 12.

Optionally, the processing unit 1302 is configured to support the first electronic device 1300 in performing S603 in FIG. 6, and/or is configured to support the first electronic device 1300 in performing S803 in FIG. 8, and/or is configured to support the first electronic device 1300 in performing S1003 in FIG. 10, and/or is configured to support the first electronic device 1300 in performing S1202 and S1205 in FIG. 12.

The transceiver unit may include a receiving unit and a sending unit, may be implemented by a transceiver or a transceiver-related circuit component, and may be a transceiver or a transceiver module. Operations and/or functions of the units in the first electronic device 1300 are separately used to implement corresponding procedures of the device control method in the foregoing method embodiments. All related content of the steps in the foregoing method embodiments may be cited in function descriptions of corresponding functional units. For brevity, details are not described herein again.

Optionally, the first electronic device 1300 shown in FIG. 13 may further include a storage unit (not shown in FIG. 13), and the storage unit stores a program or instructions. When the transceiver unit 1301 and the processing unit 1302 execute the program or the instructions, the first electronic device 1300 shown in FIG. 13 is caused to perform the device control method in the foregoing method embodiments.

For technical effects of the first electronic device 1300 shown in FIG. 13, refer to the technical effect of the device control method in the foregoing method embodiments. Details are not described herein again.

In addition to being in a form of the first electronic device 1300, the technical solution provided in this application may alternatively be a functional unit or a chip in the first electronic device, or an apparatus that matches the first electronic device for use.

In a possible design, FIG. 14 is a diagram of a structure of a third electronic device according to an embodiment of this application. As shown in FIG. 14, the third electronic device 1400 may include a transceiver unit 1401 and a processing unit 1402. The third electronic device 1400 may be configured to implement functions of the third electronic device (for example, the gateway) in the foregoing method embodiments.

Optionally, the transceiver unit 1401 is configured to support the third electronic device 1400 in performing S601, S602, S604, and S605 in FIG. 6, and/or is configured to support the third electronic device 1400 in performing S801, S802, S804, and S805 in FIG. 8, and/or is configured to support the third electronic device 1400 in performing S1001, S1002, S1004, and S1005 in FIG. 10, and/or is configured to support the third electronic device 1400 in performing S1201, S1203, S1204, and S1206 in FIG. 12.

Optionally, the processing unit 1402 is configured to support the third electronic device 1400 in determining, according to a received control command, whether the control command needs to be retransmitted to a smart device that the control command indicates to control. For example, when the control command carries first calibration information, the control command is sent to the control device based on a first number of retransmissions. When the control command does not carry first calibration information or carries second calibration information, the control command is sent to the control device based on a second number of retransmissions. The first number of retransmissions is greater than the second number of retransmissions.

The transceiver unit may include a receiving unit and a sending unit, may be implemented by a transceiver or a transceiver-related circuit component, and may be a transceiver or a transceiver module. Operations and/or functions of the units in the third electronic device 1400 are separately used to implement corresponding procedures of the device control method in the foregoing method embodiments. All related content of the steps in the foregoing method embodiments may be cited in function descriptions of corresponding functional units. For brevity, details are not described herein again.

Optionally, the third electronic device 1400 shown in FIG. 14 may further include a storage unit (not shown in FIG. 14), and the storage unit stores a program or instructions. When the transceiver unit 1401 and the processing unit 1402 execute the program or the instructions, the third electronic device 1400 shown in FIG. 14 is caused to perform the device control method in the foregoing method embodiments.

For technical effects of the third electronic device 1400 shown in FIG. 14, refer to the technical effect of the device control method in the foregoing method embodiments. Details are not described herein again.

In addition to being in a form of the third electronic device 1400, the technical solution provided in this application may alternatively be a functional unit or a chip in the third electronic device, or an apparatus that matches the third electronic device for use.

An embodiment of this application further provides a chip system, including a processor. The processor is coupled to a memory. The memory is configured to store a program or instructions. When the program or the instructions are executed by the processor, the chip system is caused to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be performed by a hardware integrated logic circuit in the processor or by using instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is caused to perform the foregoing related steps, to implement the device control method in the foregoing embodiments.

An embodiment of this application further provides a computer program product. When the computer program product runs on a computer, the computer is caused to perform the foregoing related steps, to implement the device control method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is caused to perform the device control method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for a purpose of convenient and brief description, division into the foregoing functional modules is merely used as an example for illustration. In an actual application, the foregoing functions can be allocated to different functional modules and implemented as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed method may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device control method, applied to a first electronic device, wherein the method comprises:
receiving a first instruction sent by a second electronic device;
determining that an adjustment performance capability level of a first target smart device that the first instruction instructs to control is a first capability level;
sending, to the first target smart device after first waiting time corresponding to the first capability level, a first control command corresponding to the first instruction;
receiving a second instruction sent by the second electronic device;
determining that an adjustment performance capability level of a second target smart device that the second instruction instructs to control is a second capability level; and
sending, to the second target smart device after second waiting time corresponding to the second capability level, a second control command corresponding to the second instruction, wherein the first capability level is higher than the second capability level, and the first waiting time is less than the second waiting time.

2. The method according to claim 1, wherein after receiving the first instruction sent by the second electronic device, the method further comprises:
determining that the first instruction meets a preset condition, and setting a calibration point based on information carried in the first instruction.

3. The method according to claim 2, wherein sending, to the first target smart device after the first waiting time corresponding to the first capability level, the first control command corresponding to the first instruction comprises:
when the first instruction meets the preset condition, after the first waiting time, sending the first control command to the first target smart device based on a first number of retransmissions; or
when the first instruction does not meet the preset condition, after the first waiting time, sending the first control command to the first target smart device based on a second number of retransmissions, wherein
the first number of retransmissions is greater than the second number of retransmissions, and the second number of retransmissions is an integer greater than or equal to 0.

4. The method according to claim 3, wherein after the first waiting time, sending the first control command to the first target smart device based on the first number of retransmissions comprises:
after the first waiting time, sending the first control command to the first target smart device for the first number of retransmissions.

5. The method according to claim 3, wherein after the first waiting time, sending the first control command to the first target smart device based on the first number of retransmissions comprises:
after the first waiting time, determining, based on the first number of retransmissions, a maximum number of times of sending the first control command to the first target smart device, wherein the maximum number of times is the first number of retransmissions.

6. The method according to any one of claims 2 to 4, wherein the preset condition comprises any one of the following: the first instruction is an instruction for starting controlling the first target smart device for the first time, the first instruction is an instruction for stopping controlling the first target smart device, or a difference between an accumulated value corresponding to the first instruction and an accumulated value corresponding to a last calibration point is greater than or equal to a preset value.

7. The method according to any one of claims 1 to 6, wherein the method further comprises:
receiving a third instruction sent by the second electronic device;
determining that the third instruction is used to control the first target smart device;
determining, based on an adjustment value indicated by the third instruction and a first accumulated value corresponding to a fourth instruction that is received last time and used to control the first target smart device, a second accumulated value corresponding to the third instruction; and
sending a third control command to the first target smart device after the first waiting time, wherein the third control command carries the second accumulated value.

8. The method according to any one of claims 1 to 7, wherein after receiving the first instruction sent by the second electronic device, the method further comprises:
monitoring a data processing environment; and
sending, to the first target smart device after the first waiting time corresponding to the first capability level, the first control command corresponding to the first instruction comprises:
when the adjustment performance capability level of the first target smart device is the first capability level, and the data processing environment belongs to a first data processing environment level, after the first waiting time, sending the first control command to the first target smart device; or
when the adjustment performance capability level of the first target smart device is the first capability level, and the data processing environment belongs to a second data processing environment level, after third waiting time, sending the first control command to the first target smart device, wherein
a busy degree indicated by the second data processing environment level is greater than a busy degree indicated by the first data processing environment level, and the third waiting time is waiting time that is determined based on the first waiting time and that is greater than the first waiting time.

9. The method according to claim 8, wherein the method further comprises:
receiving a fifth instruction sent by the second electronic device, wherein the fifth instruction instructs to control the first target smart device;
determining that the data processing environment is in a severely busy state; and
when the fifth instruction is an instruction for stopping controlling the first target smart device, sending, to the first target smart device, a fourth control command corresponding to the fifth instruction.

10. The method according to claim 8 or 9, wherein the method further comprises:
receiving a sixth instruction sent by the second electronic device, wherein the sixth instruction instructs to control the first target smart device;
determining that the data processing environment is in a blocked state; and
discarding the sixth instruction.

11. The method according to any one of claims 1 to 10, wherein before receiving the first instruction sent by the second electronic device, the method further comprises:
receiving device information sent by the first target smart device; and
determining the adjustment performance capability level of the first target smart device based on the device information.

12. The method according to any one of claims 1 to 11, wherein the first control command is a relative command or an absolute command, the relative command indicates the first target smart device to generate a target value based on an adjustment value indicated by the relative command, and adjust a current value of the device to the target value, and the absolute command indicates the target value, and indicates the first target smart device to adjust the current value of the device to the target value.

13. A device control method, applied to a third electronic device, wherein the method comprises:
receiving a first control command sent by a first electronic device, wherein the first control command carries first calibration information used to determine a number of retransmissions;
sending, based on a first number of retransmissions, the first control command to a first target smart device that the first control command indicates to control;
receiving a fifth control command sent by the first electronic device, wherein the fifth control command does not carry the first calibration information or carries second calibration information used to determine a number of retransmissions; and
sending, based on a second number of retransmissions, the fifth control command to the first target smart device that the fifth control command indicates to control, wherein
the first number of retransmissions is greater than the second number of retransmissions.

14. The method according to claim 13, wherein the method further comprises:
receiving device information sent by the first target smart device; and
forwarding the device information to the first electronic device.

15. An electronic device, comprising a processor and a memory, wherein the memory is coupled to the processor, the memory is configured to store computer program code, the computer program code comprises computer instructions, and when the processor reads the computer instructions from the memory, the electronic device performs the method according to any one of claims 1 to 12, or when the processor reads the computer instructions from the memory, the electronic device performs the method according to claim 13 or 14.

16. A computer-readable storage medium, wherein the computer-readable storage medium comprises a computer program, and when the computer program is run on an electronic device, the electronic device is caused to perform the method according to any one of claims 1 to 12, or the electronic device is caused to perform the method according to claim 13 or 14.

17. A computer program product, wherein when the computer program product runs on a computer, the computer is caused to perform the method according to any one of claims 1 to 12, or the computer is caused to perform the method according to claim 13 or 14.
